(19) Europäisches Patentamt
European Patent Office
Office européen des brevets

(11) **EP 4 701 261 A1**

(12) **EUROPEAN PATENT APPLICATION**
published in accordance with Art. 153(4) EPC

(43) Date of publication:
**25.02.2026 Bulletin 2026/09**

(21) Application number: **24791970.7**

(22) Date of filing: **15.04.2024**

(51) International Patent Classification (IPC):
**H04W 24/10** (2009.01)

(52) Cooperative Patent Classification (CPC):
**H04L 1/00; H04W 24/10**

(86) International application number:
**PCT/CN2024/087807**

(87) International publication number:
**WO 2024/217385 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.04.2023 CN 202310408570**

(71) Applicant: **Vivo Mobile Communication Co., Ltd. Dongguan, Guangdong 523863 (CN)**

(72) Inventors:
• JIANG, Lu
  Dongguan, Guangdong 523863 (CN)
• CHEN, Xiaohang
  Dongguan, Guangdong 523863 (CN)
• LI, Gen
  Dongguan, Guangdong 523863 (CN)

(74) Representative: **Shieldmark**
P.O. Box 90471
2509 LL The Hague (NL)

(54) **CHANNEL STATE INFORMATION PROCESSING UNIT (CPU) OCCUPATION CONDITION DETERMINATION METHOD AND DEVICE, AND PRODUCT**

(57) This application pertains to the field of communication technologies, and discloses a channel state information processing unit CPU occupancy determining method and apparatus, and a product. The CPU occupancy determining method in embodiments of this application includes: determining, by a terminal based on at least two first report sub-configurations in a target channel state information CSI report configuration, CPU occupancy required for a target CSI report, where the target CSI report includes at least one of the following: at least two first CSI reports and a second CSI report, where each first CSI report is a CSI report performed by the terminal based on one of the first report sub-configurations, and each first CSI report corresponds to one spatial adaptation pattern; the second CSI report is a CSI report performed by the terminal based on the at least two first report sub-configurations, and the second CSI report corresponds to at least two spatial adaptation patterns; and the CPU occupancy includes at least one of the following: a time period of the CPU occupancy and a quantity of occupied CPUs.

A terminal determines, based on at least two first report sub-configurations in a target CSI report configuration, CPU occupancy required for a target CSI report — 101

FIG. 2

EP 4 701 261 A1

**EP 4 701 261 A1**

## Description

This application claims priority to Chinese Patent Application No. 202310408570.3, filed with the China National Intellectual Property Administration on April 17, 2023 and entitled "CHANNEL STATE INFORMATION PROCESSING UNIT CPU OCCUPANCY DETERMINING METHOD AND APPARATUS, AND PRODUCT", which is incorporated herein by reference in its entirety.

## TECHNICAL FIELD

This application pertains to the field of communication technologies, and specifically relates to a CPU occupancy determining method and apparatus, and a product.

## BACKGROUND

Currently, a network-side device may send a channel state information report configuration (Channel State Information report configuration, CSI report configuration) to a terminal. The CSI report configuration includes a plurality of sub-configurations, and different sub-configurations correspond to different measurement hypotheses. In this way, the terminal can perform measurements based on the plurality of sub-configurations and occupy channel state information processing units (CSI Processing Unit, CPU) to perform a plurality of corresponding CSI reports, and the network-side device can obtain a plurality of CSI reports under different measurement hypotheses, so that a base station can select a configuration that is more conducive to system performance for scheduling.

However, currently, there is no CPU occupancy determining method (such as a time period of the CPU occupancy and/or a quantity of occupied CPUs) of CSI reports corresponding to a plurality of sub-configurations in a CSI report configuration. Therefore, how to determine CPU occupancy of CSI reports corresponding to a plurality of sub-configurations in a CSI report configuration is an urgent technical problem that needs to be resolved in the art.

## SUMMARY

Embodiments of this application provide a CPU occupancy determining method and apparatus, and a product, to determine CPU occupancy of corresponding CSI reports in a case that a CSI report configuration includes a plurality of sub-configurations.

According to a first aspect, a CPU occupancy determining method is provided, and is performed by a terminal. The method includes: determining, by the terminal based on at least two first report sub-configurations in a target CSI report configuration, CPU occupancy required for a target CSI report, where the target CSI report includes at least one of the following: at least two first CSI reports and a second CSI report, where each first CSI report is a CSI report performed by the terminal based on one of the first report sub-configurations, and each first CSI report corresponds to one spatial adaptation pattern; the second CSI report is a CSI report performed by the terminal based on the at least two first report sub-configurations, and the second CSI report corresponds to at least two spatial adaptation patterns; and the CPU occupancy includes at least one of the following: a time period of the CPU occupancy and a quantity of occupied CPUs.

According to a second aspect, a CPU occupancy determining apparatus is provided. The CPU occupancy determining apparatus includes a determining module. The determining module is configured to determine, based on at least two first report sub-configurations in a target CSI report configuration, CPU occupancy required for a target CSI report, where the target CSI report includes at least one of the following: at least two first CSI reports and a second CSI report, where each first CSI report is a CSI report performed by a terminal based on one of the first report sub-configurations, and each first CSI report corresponds to one spatial adaptation pattern; the second CSI report is a CSI report performed by the terminal based on the at least two first report sub-configurations, and the second CSI report corresponds to at least two spatial adaptation patterns; and the CPU occupancy includes at least one of the following: a time period of the CPU occupancy and a quantity of occupied CPUs.

According to a third aspect, a terminal is provided. The terminal includes a processor and a memory. The memory stores a program or instructions capable of running on the processor. When the program or instructions are executed by the processor, the steps of the method according to the first aspect are implemented.

According to a fourth aspect, a terminal is provided and includes a processor and a communication interface. The processor is configured to determine, based on at least two first report sub-configurations in a target CSI report configuration, CPU occupancy required for a target CSI report, where the target CSI report includes at least one of the following: at least two first CSI reports and a second CSI report, where each first CSI report is a CSI report performed by the terminal based on one of the first report sub-configurations, and each first CSI report corresponds to one spatial adaptation pattern; the second CSI report is a CSI report performed by the terminal based on the at least two first report sub-configurations, and the second CSI report corresponds to at least two spatial adaptation patterns; and the CPU occupancy includes at least one of the following: a time period of the CPU occupancy and a quantity of occupied CPUs.

According to a fifth aspect, a readable storage medium is provided. The readable storage medium stores a program or instructions. When the program or instructions are executed by a processor, the steps of the method according to the first aspect are implemented.

According to a sixth aspect, a chip is provided.

The chip includes a processor and a communication interface. The communication interface is coupled to the processor. The processor is configured to run a program or instructions to implement the steps of the method according to the first aspect.

According to a seventh aspect, a computer program or program product is provided. The computer program or program product is stored in a storage medium. The computer program or program product is executed by at least one processor to implement the steps of the method according to the first aspect.

In the embodiments of this application, the terminal may determine, based on the at least two first report sub-configurations in the target CSI report configuration, the CPU occupancy required for the target CSI report, where the target CSI report includes at least one of the following: the at least two first CSI reports and the second CSI report, and the CPU occupancy includes at least one of the time period of the CPU occupancy and the quantity of occupied CPUs, where each first CSI report is a CSI report performed by the terminal based on one of the first report sub-configurations, and each first CSI report corresponds to one spatial adaptation pattern; and the second CSI report is a CSI report performed by the terminal based on the at least two first report sub-configurations, and the second CSI report corresponds to at least two spatial adaptation patterns. Because the terminal can determine CPU occupancy (that is, the time period of the CPU occupancy and the quantity of occupied CPUs) of at least one of the at least two first CSI reports and the second CSI report based on the at least two first report sub-configurations in the target CSI report configuration, that is, because the terminal can determine CPU occupancy of CSI reports corresponding to a plurality of first report sub-configurations in the target CSI report configuration, a technical problem in the related art that CPU occupancy of CSI reports corresponding to a plurality of sub-configurations in a CSI report configuration cannot be determined can be resolved.

## BRIEF DESCRIPTION OF DRAWINGS

FIG. 1 is a block diagram of a wireless communication system according to an embodiment of this application;

FIG. 2 is a schematic flowchart of a CPU occupancy determining method according to an embodiment of this application;

FIG. 3 is a first schematic diagram illustrating a terminal determining CPU occupancy required for a CSI report according to an embodiment of this application;

FIG. 4 is a second schematic diagram illustrating a terminal determining CPU occupancy required for a CSI report according to an embodiment of this application;

FIG. 5 is a third schematic diagram illustrating a terminal determining CPU occupancy required for a CSI report according to an embodiment of this application;

FIG. 6 is a first schematic diagram illustrating resource groups included in a resource set according to an embodiment of this application;

FIG. 7 is a fourth schematic diagram illustrating a terminal determining CPU occupancy required for a CSI report according to an embodiment of this application;

FIG. 8 is a second schematic diagram illustrating resource groups included in a resource set according to an embodiment of this application;

FIG. 9 is a fifth schematic diagram illustrating a terminal determining CPU occupancy required for a CSI report according to an embodiment of this application;

FIG. 10 is a sixth schematic diagram illustrating a terminal determining CPU occupancy required for a CSI report according to an embodiment of this application;

FIG. 11 is a seventh schematic diagram illustrating a terminal determining CPU occupancy required for a CSI report according to an embodiment of this application;

FIG. 12 is an eighth schematic diagram illustrating a terminal determining CPU occupancy required for a CSI report according to an embodiment of this application;

FIG. 13 is a ninth schematic diagram illustrating a terminal determining CPU occupancy required for a CSI report according to an embodiment of this application;

FIG. 14 is a first schematic diagram of a structure of a CPU occupancy determining apparatus according to an embodiment of this application;

FIG. 15 is a second schematic diagram of a structure of a CPU occupancy determining apparatus according to an embodiment of this application;

FIG. 16 is a schematic diagram of a structure of a communication device according to an embodiment of this application; and

FIG. 17 is a schematic diagram of a hardware structure of a terminal according to an embodiment of this application.

## DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The following describes terms used in the embodiments of this application.

1. Energy-saving technology for a network-side device

In a new radio (New Radio, NR) system, a network-side device may use a plurality of shutdown technologies to reduce power consumption of the network side, so as to achieve an objective of energy saving. The plurality of shutdown technologies may include a symbol shutdown technology, a carrier shutdown technology, a channel shutdown technology, and a deep sleep technology.

Principle of the symbol shutdown technology:

The network-side device may turn off a power switch of a power amplifier (Power Amplifier, PA) in a symbol period without data transmission, and turn on the power switch of the PA in a symbol period with data transmission, to reduce system power consumption while ensuring that a service is not affected.
It should be noted that because the symbol shutdown technology uses a discontinuous transmission (Discontinuous Transmission, DTX) technology, the symbol shutdown technology may also be referred to as a DTX energy-saving technology.

Carrier shutdown technology

In a case that load of a capacity cell is low, the network-side device may migrate terminals served by the network-side device to a basic coverage cell and shut down the capacity cell to achieve an effect of energy saving. In a case that load of the basic coverage cell increases, the network-side device may wake up the capacity cell, and migrate some served terminals to the awakened capacity cell.

Channel shutdown technology

When load of a cell is low, the network-side device may turn off transmitting channels (or receiving channels) with different granularities based on a load level of the cell, to save energy. After channel shutdown, the network-side device may make power compensation for broadcast and data channels to ensure network coverage and performance.

2. Spatial energy-saving technology for the network-side device

In the NR system, the network-side device is equipped with a massive multiple input multiple output (Massive Multiple Input Multiple Output, mMIMO) array. However, power consumption of the mMIMO array is high. Therefore, in a slot without data transmission, the network-side device may turn off some ports of the mMIMO array to reduce power consumption of the network-side device.

3. Sub-configuration

In a case that the network-side device uses the energy-saving technology, to further assist the network-side device in decision-making, the terminal may be considered to report CSI for a plurality of different measurement hypotheses (different port quantities, different shutdown muting patterns (patterns), and different power control offsets (power control offsets)) in advance, and these measurement hypotheses may be combined into different sub-configurations.

4. Other terms

The terms "first", "second", and the like in this specification are used to distinguish between similar objects instead of describing a specified order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "or" in this application indicates at least one of connected objects. For example, "A or B" covers three schemes, that is, scheme 1: including A and excluding B; scheme 2: including B and excluding A; and scheme 3: including both A and B. The character "/" generally indicates an "or" relationship between associated objects.
The term "indication" in this application may be either a direct indication (or an explicit indication) or an indirect indication (or an implicit indication). The direct indication may be understood as follows: A sender explicitly notifies a receiver, in a sent indication, of content such as specific information, an operation to be performed, or a result being requested. The indirect indication may be understood as follows: A receiver determines corresponding information based on an indication sent by a sender, or makes a decision and determines, based on a decision result, an operation to be performed or a result being requested, or the like.
It should be noted that technologies described in the embodiments of this application are not limited to a long term evolution (Long Term Evolution, LTE)/LTE-Advanced (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), or other systems. The terms "system" and "network" in the embodiments of this application are usually used interchangeably. The described technologies may be used for the foregoing systems and radio technologies, and may also be used for other systems and radio technologies. However, in the following descriptions, a new radio (New Radio, NR) system is described for an illustrative purpose, and NR terms are used in most of the following descriptions. These technologies may also be applied to other systems than the NR system, for example, a 6th Generation (6th Generation, 6G) communication system.

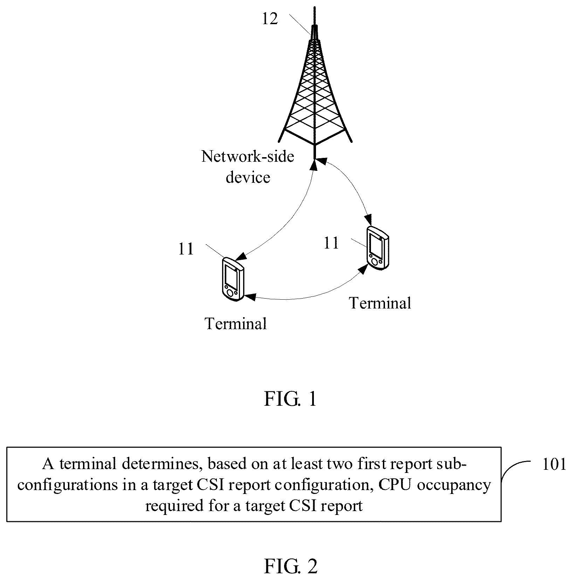

FIG. 1 is a block diagram of a wireless communication system to which an embodiment of this application may be applied. The wireless communication system includes a terminal 11 and a network-side device 12. The terminal 11 may be a terminal-side device such as a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR) or virtual reality (virtual reality, VR) device, a robot, a wearable device (Wearable Device), a flight vehicle (flight vehicle), vehicle user equipment (Vehicle User Equipment, VUE), shipborne equipment, pedestrian user equipment (Pedestrian User Equipment, PUE), a smart home (a home device having a wireless communication function, such as a refrigerator, a television, a washing machine, or furniture), a game console, a personal computer (Personal Computer, PC), a teller machine, or a self-service machine. The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, or the like. The vehicle user equipment may also be referred to as a vehicle-mounted terminal, a vehicle-mounted controller, a vehicle-mounted module, a vehicle-mounted component, a vehicle-mounted chip, a vehicle-mounted unit, or the like. It should be noted that a specific type of the terminal 11 is not limited in the embodiments of this application. The network-side device 12 may include an access network device or a core network device. The access network device may also be referred to as a radio access network (Radio Access Network, RAN) device, a radio access network function, or a radio access network element. The access network device may include a base station, a wireless local area network (Wireless Local Area Network, WLAN) access point (Access Point, AS), a wireless fidelity (Wireless Fidelity, Wi-Fi) node, or the like. The base station may be referred to as a NodeB (NodeB, NB), an evolved NodeB (Evolved NodeB, eNB), a next generation NodeB (next generation NodeB, gNB), a new radio NodeB (New Radio NodeB, NR NodeB), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home NodeB, HNB), a home evolved NodeB (home evolved NodeB), a transmission reception point (Transmission Reception Point, TRP), or another appropriate term in the art. As long as the same technical effect is achieved, the base station is not limited to specific technical terms. It should be noted that in the embodiments of this application, only a base station in an NR system is used as an example, but a specific type of the base station is not limited.

A CPU occupancy determining method and apparatus, and a product provided in the embodiments of this application are hereinafter described in detail by using some embodiments and application scenarios thereof with reference to the accompanying drawings.

Currently, a network-side device may send a CSI report configuration to a terminal, where the CSI report configuration includes a plurality of sub-configurations, and each sub-configuration corresponds to one spatial adaptation pattern (spatial adaptation pattern), that is, different sub-configurations correspond to different measurement hypotheses. In this way, the terminal can perform measurements based on the plurality of sub-configurations and occupy a CPU to perform a plurality of corresponding CSI reports. Therefore, the network-side device can obtain a plurality of CSI reports under different measurement hypotheses, so that a base station can select a configuration that is more conducive to system performance for scheduling. However, currently, there is no CPU occupancy determining method (such as a time period of the CPU occupancy and/or a quantity of occupied CPUs) of CSI reports corresponding to a plurality of sub-configurations in a CSI report configuration. Therefore, how to determine CPU occupancy of CSI reports corresponding to a plurality of sub-configurations in a CSI report configuration is an urgent technical problem that needs to be resolved in the art.

However, in an embodiment of this application, a terminal may determine, based on at least two sub-configurations included in a CSI report configuration, CPU occupancy required for at least one of at least two CSI reports, where each CSI report is a CSI report performed by the terminal based on one sub-configuration, each CSI report corresponds to one spatial adaptation pattern, and the CPU occupancy includes a time period of the CPU occupancy and a quantity of occupied CPUs. Because the terminal can determine the CPU occupancy (that is, the time period of the CPU occupancy and the quantity of occupied CPUs) of the at least two CSI reports based on the at least two sub-configurations included in the CSI report configuration, that is, because the terminal can determine CPU occupancy of CSI reports corresponding to a plurality of sub-configurations in a CSI report configuration, a technical problem in the related art that CPU occupancy of CSI reports corresponding to a plurality of sub-configurations in a CSI report configuration cannot be determined can be resolved.

FIG. 2 is a flowchart of a CPU occupancy determining method according to an embodiment of this application. As shown in FIG. 2, the CPU occupancy determining method provided in this embodiment of this application may include the following step 101.

Step 101: A terminal determines, based on at least two first report sub-configurations in a target CSI report configuration, CPU occupancy required for a target CSI report.

Optionally, in this embodiment of this application, the terminal may first receive the target CSI report configuration from a network-side device, and then determine, based on the at least two first report sub-configurations, the CPU occupancy required for the target CSI report.

In this embodiment of this application, for each of the at least two first report sub-configurations, specifically, one first report sub-configuration may be a sub-configuration, and one first report sub-configuration may be associated with a reference signal resource object.

The reference signal resource object may include at least one of the following: a channel state information reference signal (CSI Reference Signal, CSI-RS) resource, a CSI-RS resource set, and a CSI resource configuration.

It should be noted that the foregoing "sub-configuration" may be understood as a combination of one or more parameters in different time-frequency-space-power domain configurations, and different parameter combinations correspond to different CSI measurement hypotheses, adaptation patterns, or sub-configurations. The sub-configuration is not necessarily visible to a protocol.

Optionally, in this embodiment of this application, the at least two first report sub-configurations may be all the report sub-configurations or part of the report sub-configurations in the target CSI report configuration. For example, in a case that the at least two first report sub-configurations are part of the report sub-configurations in the target CSI report configuration, the at least two first report sub-configurations may be activated report sub-configurations in the target CSI report configuration.

In this embodiment of this application, the target CSI report includes at least one of the following: at least two first CSI reports and a second CSI report. Each first CSI report is a CSI report performed by the terminal based on one of the first report sub-configurations, and each first CSI report corresponds to one spatial adaptation pattern; and the second CSI report is a CSI report performed by the terminal based on the at least two first report sub-configurations, and the second CSI report corresponds to at least two spatial adaptation patterns.

It may be understood that the at least two first CSI reports are in a one-to-one correspondence with the at least two first report sub-configurations, where each first CSI report is a reporting action in which the terminal performs a measurement and calculation based on a corresponding first report sub-configuration and sends an obtained result to the network-side device, and each first CSI report needs to occupy a quantity of CPUs of the UE.

Optionally, in this embodiment of this application, in a case that the target CSI report includes the at least two first CSI reports, the at least two first report sub-configurations may be all the first report sub-configurations or part of the first report sub-configurations in the target CSI report configuration.

Optionally, in this embodiment of this application, the second CSI report includes at least two first CSI reports.

It may be understood that the at least two first CSI reports in the second CSI report are in a one-to-one correspondence with the at least two first report sub-configurations, where the second CSI report is a reporting action in which the terminal first performs a measurement and calculation based on the at least two first report sub-configurations and sends an obtained result to the network-side device, and the second CSI report needs to occupy a quantity of CPUs of the UE.

Optionally, in this embodiment of this application, in a case that the target CSI report includes the second CSI report, the at least two first report sub-configurations may be part of the first report sub-configurations in the target CSI report configuration.

In this embodiment of this application, the CPU occupancy includes at least one of the following: a time period of the CPU occupancy and a quantity of occupied CPUs.

The time period of the CPU occupancy may include a time position for starting occupying a CPU and a time position for ceasing occupying the CPU.

Optionally, in this embodiment of this application, the terminal may determine, based on a granularity of each first report sub-configuration, CPU occupancy required for each first CSI report; or may use the at least two first report sub-configurations as a whole to determine CPU occupancy required for the second CSI report.

Optionally, in this embodiment of this application, in a case that the target CSI includes the at least two first CSI reports, after the terminal determines the CPU occupancy required for the at least two first CSI reports, the terminal may perform processing by using the CPU, and report the at least two first CSI reports at a same time, or report the at least two first CSI reports at different times.

The following uses two different examples to illustrate how the terminal determines the CPU occupancy required for the target CSI report.

Example 1: The terminal determines, based on the granularity of each first report sub-configuration, the CPU occupancy required for each first CSI report.

For the time period of the CPU occupancy: Optionally, in this embodiment of this application, the CPU occupancy includes the time period of the CPU occupancy. Each first CSI report starts occupying a CPU from a corresponding first time unit, and ceases occupying the CPU in a corresponding second time unit.

In this embodiment of this application, each first CSI report corresponds to a first time unit and a second time unit.

For example, assuming that the at least two first report sub-configurations include a report sub-configuration 1 and a report sub-configuration 2, and that the at least two first CSI reports include a CSI report 1 and a CSI report 2, where the CSI report 1 is a CSI report performed by the terminal based on the report sub-configuration 1 and the CSI report 2 is a CSI report performed by the terminal based on the report sub-configuration 2, the CSI report 1 may start occupying a CPU from a corresponding first time unit (for example, a time unit 1), and cease occupying the CPU in a corresponding second time unit (for example, a time unit 2); in addition, the CSI report 2 may start occupying a CPU from a corresponding first time unit (for example, a time unit 3), and cease occupying the CPU in a corresponding second time unit (for example, a time unit 4).

Optionally, in this embodiment of this application, the first time unit may be any one of the following: a slot, an orthogonal frequency division multiplexing (Orthogonal Frequency Division Multiplexing, OFDM) symbol, a subframe, and the like. The second time unit may be any one of the following: a slot, an OFDM symbol, a subframe, and the like.

In this embodiment of this application, each first time unit is related to a reference signal resource associated with the corresponding first report sub-configuration; and each second time unit is related to a time domain position of the corresponding first CSI report.

For example, assuming that the at least two first report sub-configurations include a report sub-configuration 1, and that the at least two first CSI reports include a CSI report 1, where the CSI report 1 is a CSI report performed by the terminal based on the report sub-configuration 1, and the CSI report 1 starts occupying a CPU from a corresponding first time unit (for example, a time unit 1), and ceases occupying the CPU in a corresponding second time unit (for example, a time unit 2), the time unit 1 is related to a reference signal resource associated with the report sub-configuration 1, and the time unit 2 is related to a time domain position of the CSI report 1.

Optionally, in this embodiment of this application, each first CSI report may start occupying a CPU from a starting position of a corresponding first time unit, and cease occupying the CPU in an ending position of a corresponding second time unit.

Optionally, in this embodiment of this application, each first time unit includes any one of the following:

a time unit in which an earliest sending time of the reference signal resource associated with the first report sub-configuration corresponding to the first CSI report is located;

a time unit in which an earliest sending time of a reference signal resource set associated with the first report sub-configuration corresponding to the first CSI report is located; and

a time unit in which a first object corresponding to a reference signal resource configuration associated with the first report sub-configuration corresponding to the first CSI report is located, where

the reference signal resource may include at least one of the following: a CSI-RS resource and an SSB resource; and the reference signal resource set may include at least one of the following: a CSI-RS resource set and an SSB resource set.

It may be understood that each first time unit may be the time unit in which the earliest sending time of the reference signal resource associated with the first report sub-configuration corresponding to the first CSI report is located.

For example, assuming that the at least two first report sub-configurations include a sub-configuration 1 and a sub-configuration 2, where the sub-configuration 1 corresponds to a CSI report 1, and the sub-configuration 2 corresponds to a CSI report 2, the CSI report 1 may start occupying a CPU from a time unit in which an earliest sending time of a CSI-RS resource associated with a first report sub-configuration (that is, the sub-configuration 1) corresponding to the CSI report 1 is located, and the CSI report 2 may start occupying a CPU from a time unit in which an earliest sending time of a CSI-RS resource associated with a first report sub-configuration (that is, the sub-configuration 2) corresponding to the CSI report 2 is located.

It may be understood that each first time unit may be the time unit in which the earliest sending time of the reference signal resource set associated with the first report sub-configuration corresponding to the first CSI report is located.

It may be understood that each first time unit may be the time unit in which the first object corresponding to the CSI resource configuration associated with the first report sub-configuration corresponding to the first CSI report is located.

In this embodiment of this application, the first object includes at least one of the following: a reference signal resource set with an earliest sending time and a reference signal resource with an earliest sending time.

Optionally, in this embodiment of this application, each second time unit is a time unit in which reporting of the corresponding first CSI report is ceased.

For example, assuming that the at least two first report sub-configurations include a sub-configuration 1 and a sub-configuration 2, where the sub-configuration 1 corresponds to a CSI report 1, and the sub-configuration 2 corresponds to a CSI report 2, the CSI report 1 may cease occupying a CPU in a time unit in which reporting of the CSI report 1 is ceased, and the CSI report 2 may cease occupying a CPU in a time unit in which reporting of the CSI report 2 is ceased.

For the quantity of occupied CPUs:
Optionally, in this embodiment of this application, the CPU occupancy includes the quantity of occupied CPUs. A quantity of CPUs occupied by each first CSI report is related to a quantity of resources in a resource set that is used for channel measurement and associated with the first report sub-configuration corresponding to the first CSI report.

Further, the quantity of CPUs occupied by each first CSI report may be related to a quantity of resources in a channel measurement CSI-RS resource set associated with the corresponding first report sub-configuration.

Further, for each of the at least two first CSI reports, in a case that one first CSI report is used for reporting at least one of a rank indicator (Rank Indicator, RI), a layer indicator (Layer Indicator, LI), a precoding matrix indicator (Precoding Matrix Indicator, PMI), and a channel quality indicator (Channel Quality Indicator, CQI), a quantity of CPUs occupied by the first CSI report is related to a quantity of resources in a resource set that is used for channel measurement and associated with a first report sub-configuration corresponding to the first CSI report.

In this embodiment of this application, when the target CSI report configuration includes a plurality of first report sub-configurations, the terminal may occupy and release a CPU at a granularity of the first CSI report corresponding to each first report sub-configuration, to ensure that first CSI reports corresponding to different first report sub-configurations occupy the CPU in staggered time periods.

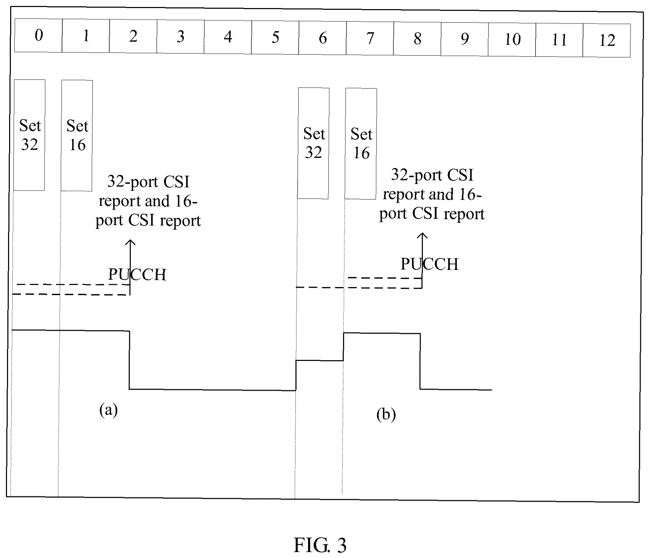

Assuming that the target CSI report configuration includes two first report sub-configurations, which correspond to two resource sets with 16 ports and 32 ports. As shown in (a) in FIG. 3, it is assumed that the terminal starts occupying a CPU from an earliest sending time of a resource set associated with the target CSI report configuration, that is, both a 32-port CSI report and a 16-port CSI report start occupying the CPU from a sending time of a set 32. As shown in (b) in FIG. 3, however, in this embodiment of this application, the terminal starts occupying a CPU from a sending time of an actual resource set of each first CSI report corresponding to each report sub-configuration included in the target CSI report configuration, that is, a 32-port CSI report starts occupying the CPU from a sending time of a set 32, and a 16-port CSI report starts occupying the CPU from a sending time of a set 16. Compared with the foregoing assumed solution, this embodiment of this application can alleviate CPU occupancy pressure at a same time, and the released CPU can be used for processing other CSI reports.

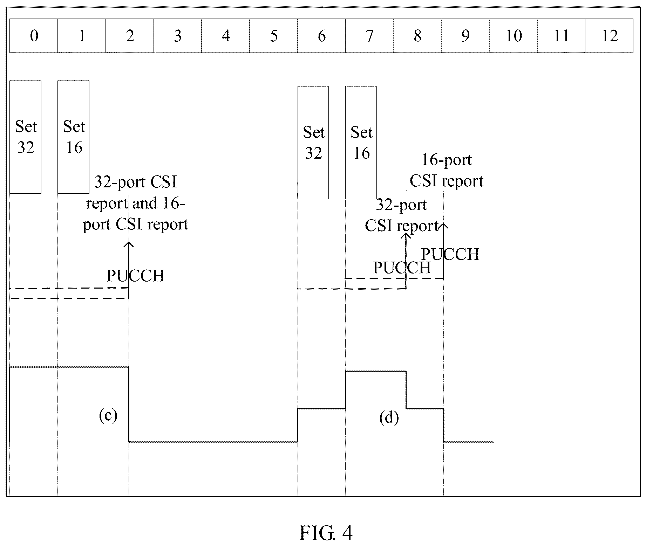

It may be understood that in this embodiment of this application, time periods in which the CPU is occupied may be staggered. For example, the target CSI report configuration includes two first report sub-configurations, as shown in (c) in FIG. 4. Assuming that the CPU occupancy is concentrated in a time period from a sending time of a set 32 to a time of ceasing reporting of a 32-port CSI report and a 16-port CSI report, in this time period, CSI reports of a plurality of first report sub-configurations are processed in a centralized manner, and few opportunities are provided for processing CSI of other functions. As shown in (d) in FIG. 4, in this embodiment of this application, reporting of CSI reports of a plurality of first report sub-configurations may be staggered. To be specific, a 32-port CSI report occupies a CPU from a sending time of a set 32 to a time of ceasing reporting of the 32-port CSI report, and a 16-port CSI report occupies the CPU from a sending time of a set 16 to a time of ceasing reporting of the 16-port CSI report. In this way, more opportunities are provided for processing CSI reports of other functions.

Therefore, it can be learned that, because the terminal can determine the CPU occupancy of the at least two first CSI reports based on the at least two first report sub-configurations in the target CSI report configuration (that is, at least one of the time period of the CPU occupancy and the quantity of occupied CPUs), the terminal can cease occupying a corresponding CPU in a case that reporting of a CSI report corresponding to a first report sub-configuration is ceased, instead of waiting until all CSI reports corresponding to all first report sub-configurations included in all target CSI report configurations are reported. Therefore, CPU occupancy by first CSI reports corresponding to different first report sub-configurations can be staggered, a problem that CPU occupancy by a plurality of CSI reports is excessively concentrated can be avoided, and resource utilization is improved.

Example 2: The terminal determines, by using the at least two first report sub-configurations as a whole, the CPU occupancy required for the second CSI report.

For the time period of the CPU occupancy:
Optionally, in this embodiment of this application, the at least two first report sub-configurations are activated report sub-configurations in the target CSI report configuration; and the CPU occupancy includes the time period of the CPU occupancy. The second CSI report starts occupying a CPU from a third time unit, and ceases occupying the CPU in a fourth time unit.

Optionally, in this embodiment of this application, the third time unit may be any one of the following: a slot, an OFDM symbol, a subframe, and the like. The fourth time unit may be any one of the following: a slot, an OFDM symbol, a subframe, and the like.

In this embodiment of this application, the third time unit is related to reference signal resources associated with the at least two first report sub-configurations; and the fourth time unit is related to a time domain position of the second CSI report.

Optionally, in this embodiment of this application, the third time unit includes any one of the following:

a time unit in which an earliest sending time of the reference signal resources associated with the at least two first report sub-configurations is located;
a time unit in which an earliest sending time of reference signal resource sets associated with the at least two first report sub-configurations is located; and
a time unit in which a second object corresponding to CSI resource configurations associated with the at least two first report sub-configurations is located.

In this embodiment of this application, the second object includes at least one of the following: a reference signal resource set with an earliest sending time and a reference signal resource with an earliest sending time.

Optionally, in this embodiment of this application, the fourth time unit is a time unit in which reporting of the second CSI report is ceased.

For the quantity of occupied CPUs:
Optionally, in this embodiment of this application, the at least two first report sub-configurations are activated report sub-configurations in the target CSI report configuration; and the CPU occupancy includes the quantity of occupied CPUs; and a quantity of CPUs occupied by the second CSI report is related to quantities of resources in resource sets that are used for channel measurement and associated with the at least two activated first report sub-configurations.

Further, the quantity of CPUs occupied by the second CSI report may be related to a quantity of resources in channel measurement CSI-RS resource sets associated with the at least two activated first report sub-configurations.

Further, in a case that the second CSI report is used for at least one of an RI, an LI, a PMI, and a CQI, the quantity of CPUs occupied by the second CSI report is related to quantities of resources in resource sets that are used for channel measurement and associated with the at least two activated first report sub-configurations.

Optionally, in this embodiment of this application, the quantity of CPUs occupied by the second CSI report is determined based on the quantities of resources in the resource sets that are used for channel measurement and associated with the at least two activated first report sub-configurations, and at least two scaling factors; and the at least two first report sub-configurations are in a one-to-one correspondence with the at least two scaling factors.

For example, it is assumed that X first report sub-configurations (sub-configuration) are activated in the target CSI report configuration, and that quantities of resources in resource sets used for channel measurement and corresponding to the sub-configurations are $\{m_1, m_2, m_3, ..., m_x\}$ respectively, that is, a quantity of resources in a resource set used for channel measurement and corresponding to a first one of the X sub-configurations is $m_1$, a quantity of resources in a resource set used for channel measurement and corresponding to a second one of the X sub-configurations is $m_2$, a quantity of resources in a resource set used for channel measurement and corresponding to a third one of the X sub-configurations is $m_3$, and so on. In this case, the quantity of CPUs occupied by the second CSI report is $O_{CPU} = a_1 \times m_1 + a_2 \times m_2 + a_3 \times m_3 + ... + a_x \times m_x$, where $m_i$ is a quantity of resources in a resource set used for channel measurement and corresponding to an $i^{th}$ sub-configuration, $a_i$ is a scaling factor corresponding to the $i^{th}$ sub-configuration, X is a positive integer, and i is a positive integer greater than or equal to 1 and less than or equal to X.

Further, each of the at least two scaling factors may be the same. For example, each scaling factor is 1.

Optionally, in this embodiment of this application, the at least two first report sub-configurations are activated report sub-configurations in the target CSI report configuration; and the CPU occupancy includes the quantity of occupied CPUs; and in a case that the second CSI report is used to report a first parameter, a quantity of CPUs occupied by the second CSI report is determined based on a quantity of the first report sub-configurations included in the second CSI report.

It may be understood that under this condition, a quantity of CPUs occupied by a CSI report corresponding to each first report sub-configuration is 1, and therefore, a quantity of second CSI reports is equal to a quantity of first report sub-configurations included in the second CSI report.

In this embodiment of this application, the first parameter includes at least one of the following: reference signal received power (Reference Signal Receiving Power, RSRP) and a signal to interference plus noise ratio (Signal to Interference plus Noise Ratio, SINR).

It may be understood that for a CSI report used as an RSRP/SINR report, a quantity of CPUs occupied by the report is equal to a quantity of all activated report sub-configurations or spatial adaptation patterns in the first report sub-configurations.

The following uses specific implementations as examples.

Implementation 1

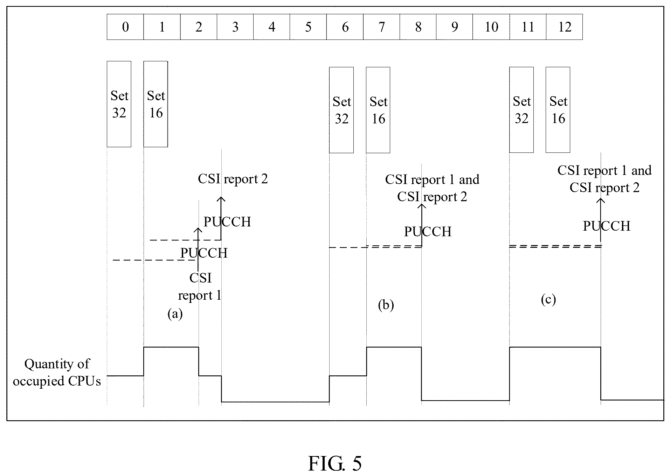

FIG. 5 is a schematic diagram illustrating a terminal determining CPU occupancy required for a target CSI report according to an embodiment of this application. A target CSI report configuration (CSI report configuration) includes a plurality of first report sub-configurations, such as a sub-configuration 1 and a sub-configuration 2. The sub-configuration 1 corresponds to a set 32, the sub-configuration 2 corresponds to a set 16, the set 32 corresponds to a spatial adaptation pattern, and the set 16 corresponds to another spatial adaptation pattern.

The terminal may determine, based on a granularity of a sub-configuration, CPU occupancy of a first CSI report corresponding to each sub-configuration, and report first CSI reports corresponding to two sub-configurations, as shown in (a) in FIG. 5. Although both the sub-configuration 1 and the sub-configuration 2 belong to the same CSI report configuration, release positions are different. A first CSI report (for example, a CSI report 1) corresponding to the sub-configuration corresponding to the set 32 occupies and releases a CPU earlier, that is, starts occupying the CPU in a slot 0 and ceases occupying the CPU in a slot 2, while a first CSI report (for example, a CSI report 2) corresponding to the sub-configuration corresponding to the set 16 occupies and releases the CPU later, that is, starts occupying the CPU in a slot 1 and ceases occupying the CPU in a slot 3.

Alternatively, the terminal may simultaneously report two CSI reports corresponding to two sub-configurations. As shown in (b) in FIG. 5, although a CSI report 1 corresponding to the sub-configuration corresponding to the set 32 and a CSI report 2 corresponding to the sub-configuration corresponding to the set 16 are reported at a same time, starting positions of CPU occupancy are different, and the occupancy starts from a slot in which a resource set corresponding to each sub-configuration is sent, that is, the CSI report 1 corresponding to the set 32 starts occupying a CPU from a slot 6, the CSI report 2 corresponding to the set 16 starts occupying the CPU from a slot 7, and both the CSI report 1 and the CSI report 2 cease occupying the CPU in a slot 8. Therefore, the target CSI report includes CSI reports (that is, the CSI report 1 and the CSI report 2) corresponding to the two sub-configurations, and the CSI report corresponding to each sub-configuration starts occupying the CPU from a sending time of a corresponding resource set, and the target CSI report ceases occupying the CPU at a time of ceasing reporting of CSI reports corresponding to the two sub-configurations.

Alternatively, the terminal may consider the set 32 and the set 16 as a whole, as shown in (c) in FIG. 5. Regardless of when resources corresponding to the set 32 and the set 16 are sent, CPU occupancy starts from a set (for example, the set 32) corresponding to an earliest sub-configuration in the CSI report configuration, and continues until all CSI reports (that is, a CSI report 1 and a CSI report 2) are reported together, that is, the CSI report 1 corresponding to the set 32 and the CSI report 2 corresponding to the set 16 start occupying a CPU from a slot 11, and the occupancy continues until the CSI report 1 and the CSI report 2 are reported together. This case corresponds to a process in which the target CSI report includes a second CSI report including CSI reports corresponding to two sub-configurations, but regardless of when the sub-configurations included therein are sent, the occupancy starts from a reference signal corresponding to the earliest sub-configuration, and the occupancy continues until a time of ceasing CSI reports corresponding to all sub-configurations included in the second CSI report.

Implementation 2

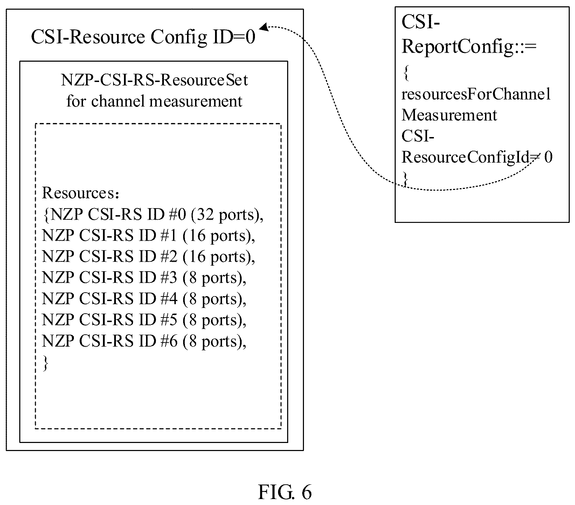

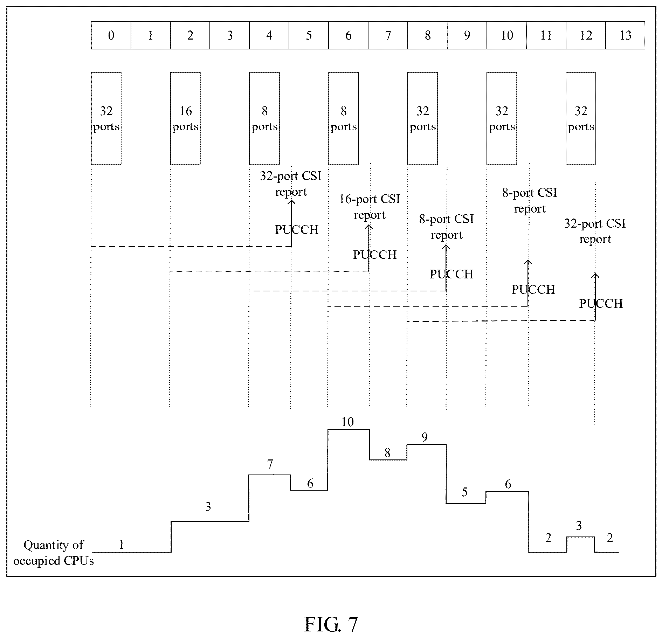

FIG. 6 is a schematic diagram illustrating resource groups included in a resource set. FIG. 7 is a schematic diagram illustrating a terminal determining CPU occupancy required for a target CSI report. As shown in FIG. 6, each resource set (resource set) includes a plurality of resource groups (resource groups), which correspond to different spatial adaptation patterns (for example, 8 ports (ports), 16 ports, and 32 ports), that is, a resource set CSI-Resource Config ID = 0 includes three resource groups: a resource group 1 (including NZP CSI-RS ID #0), which corresponds to 32 ports, a resource group 2 (including NZP CSI-RS ID #1 and NZP CSI-RS ID #2), which corresponds to 16 ports, and a resource group 3 (including NZP CSI-RS ID #3, NZP CSI-RS ID #4, NZP CSI-RS ID #5, and NZP CSI-RS ID #6), which corresponds to 8 ports. In addition, in terms of a reporting manner, each CSI report corresponds to only one spatial adaptation pattern. As shown in FIG. 7, a quantity of CPUs occupied by a first CSI report is related to a quantity of resources in a resource set of a spatial adaptation pattern corresponding to the first CSI report, that is, a 32-port CSI report occupies one CPU, a 16-port CSI report occupies two CPUs, and an 8-port CSI report occupies four CPUs. A time period of CPU occupancy by a CSI report starts from a sending time of a resource corresponding to a spatial adaptation pattern corresponding to the CSI report.

Implementation 3

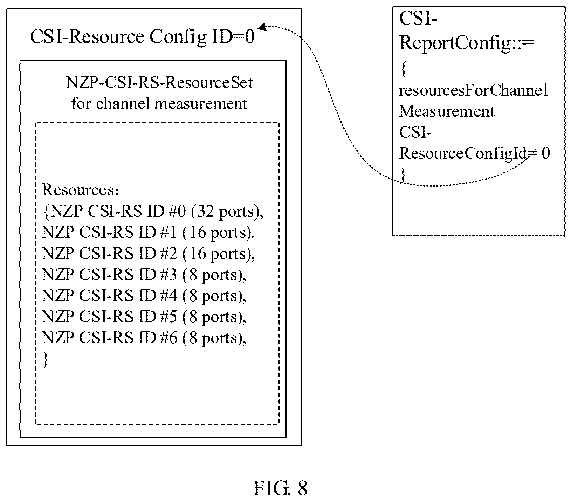

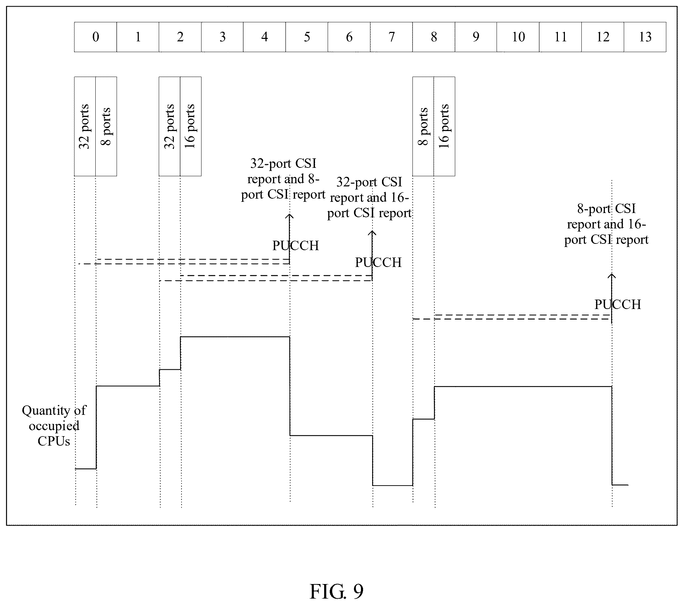

FIG. 8 is a schematic diagram illustrating resource groups included in a resource set. FIG. 9 is a schematic diagram illustrating a terminal determining CPU occupancy required for a target CSI report. As shown in FIG. 8, each resource set includes a plurality of resource groups, which correspond to different spatial adaptation patterns (8 ports, 16 ports, and 32 ports), that is, a resource set CSI-Resource Config ID = 0 includes three resource groups: a resource group 1 (including NZP CSI-RS ID #0), which corresponds to 32 ports, a resource group 2 (including NZP CSI-RS ID #1 and NZP CSI-RS ID #2), which corresponds to 16 ports, and a resource group 3 (including NZP CSI-RS ID #3, NZP CSI-RS ID #4, NZP CSI-RS ID #5, and NZP CSI-RS ID #6), which corresponds to 8 ports. In terms of a reporting manner, a CSI report includes a plurality of CSI reports. As shown in FIG. 9, a quantity of CPUs occupied by each first CSI report is related to a quantity of resources in a resource set of a spatial adaptation pattern corresponding to the first CSI report, that is, a 32-port CSI report occupies one CPU, a 16-port CSI report occupies two CPUs, and an 8-port CSI report occupies four CPUs. For a CPU occupied by a CSI report corresponding to a sub-configuration in each CSI report, the occupancy starts from a sending time of a resource corresponding to a spatial adaptation pattern (sub-configuration). For example, a first report is a CSI report (32 + 8 ports), where a 32-port CSI report starts occupying a CPU from a sending time of a 32-port resource, an 8-port CSI report starts occupying a CPU from a sending time of an 8-port resource, and the occupancy is ceased when the CSI report is completed.

Implementation 4

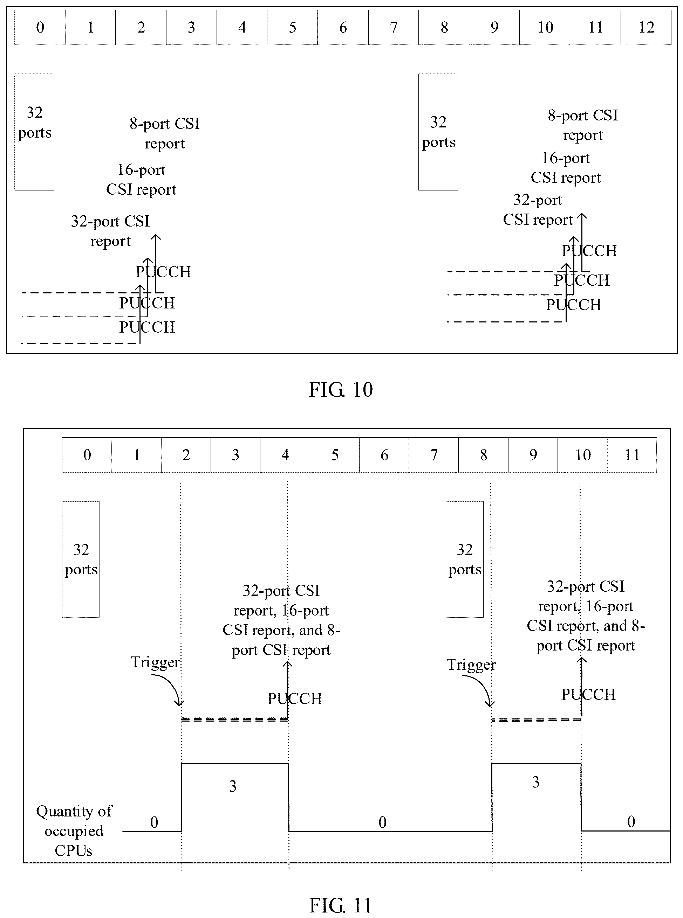

FIG. 10, FIG. 11, and FIG. 12 are schematic diagrams illustrating a terminal determining CPU occupancy required for a target CSI report, where one CSI-RS resource (32 ports) is sent in each cycle (cycle), and is configured with three spatial adaptation patterns (corresponding to 8 ports, 16 ports, and 32 ports). However, there are a plurality of reporting manners:

As shown in FIG. 10, the terminal may report corresponding CSI reports based on the configured spatial adaptation patterns. Although all the three CSI reports belong to a same CSI report configuration (that is, a first CSI report configuration), the three CSI reports correspond to different first report sub-configurations (sub-configuration), and the different sub-configurations are reported at different occasions (occasion). In this way, a quantity of CPUs occupied by a second CSI report is related to a quantity of configured spatial adaptation patterns (sub-configuration).

As shown in FIG. 11, the terminal may alternatively report CSI reports (that is, a 32-port CSI report, a 16-port CSI report, and an 8-port CSI report) corresponding to a plurality of first report sub-configurations (that is, a sub-configuration corresponding to 32 ports, a sub-configuration corresponding to 16 ports, and a sub-configuration corresponding to 8 ports) at a same occasion. The following figure is an aperiodic schematic diagram, where occupancy of a CPU starts from an OFDM symbol that triggers (trigger) reporting, and the CPU is released when reporting is ceased; and a quantity of CPUs occupied by a second CSI report is still related to a quantity of activated spatial adaptation patterns (sub-configuration).

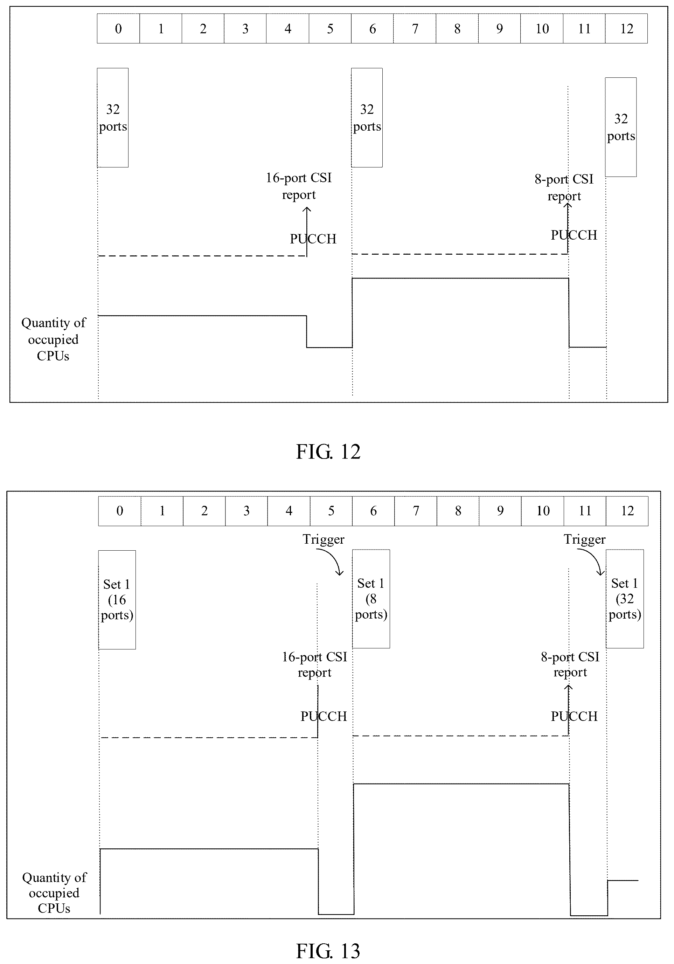

As shown in FIG. 12, although a CSI-RS resource (32 ports) is sent in every cycle, not all CSI reports are reported in every cycle. In this way, only a 16-port CSI report is reported in a first cycle and an 8-port CSI report is reported in a second cycle. A specific spatial adaptation pattern for reporting a CSI report by the terminal in a cycle may be dynamically indicated by the network-side device, or may be configured by the network-side device in advance by using radio resource control (Radio Resource Control, RRC) signaling. Therefore, a quantity of occupied CPUs is related to a quantity of resources corresponding to activated spatial adaptation patterns.

In the CPU occupancy determining method provided in this embodiment of this application, the terminal may determine, based on the at least two first report sub-configurations in the target CSI report configuration, the CPU occupancy required for the target CSI report, where the target CSI report includes at least one of the following: the at least two first CSI reports and the second CSI report, and the CPU occupancy includes at least one of the time period of the CPU occupancy and the quantity of occupied CPUs, where each first CSI report is a CSI report performed by the terminal based on one of the first report sub-configurations, and each first CSI report corresponds to one spatial adaptation pattern; and the second CSI report is a CSI report performed by the terminal based on the at least two first report sub-configurations, and the second CSI report corresponds to at least two spatial adaptation patterns. Because the terminal can determine CPU occupancy (that is, the time period of the CPU occupancy and the quantity of occupied CPUs) of at least one of the at least two first CSI reports and the second CSI report based on the at least two first report sub-configurations in the target CSI report configuration, that is, because the terminal can determine CPU occupancy of CSI reports corresponding to a plurality of first report sub-configurations in the target CSI report configuration, a technical problem in the related art that CPU occupancy of CSI reports corresponding to a plurality of sub-configurations in a CSI report configuration cannot be determined can be resolved.

Certainly, if a spatial adaptation pattern (spatial adaptation pattern) corresponding to at least one of the CSI-RS resource, the CSI-RS resource set, and the CSI resource configuration can be dynamically switched by using signaling, a CSI report associated with the spatial adaptation pattern or a time period of the CPU occupancy by the CSI report can also change. Details are described below by using examples separately.

Optionally, in a possible implementation of this embodiment of this application, after the foregoing step 101, the CPU occupancy determining method provided in this embodiment of this application may further include the following step 102 and step 103.

Step 102: The terminal receives first signaling.

In this embodiment of this application, the first signaling is used to adjust a reference signal resource associated with each first CSI report.

Optionally, in this embodiment of this application, the first signaling may be layer (layer) 1 or layer 2 signaling.

Step 103: The terminal determines, based on the first signaling, the CPU occupancy required for each first CSI report.

Optionally, in this embodiment of this application, the CPU occupancy includes the time period of the CPU occupancy; and each first CSI report starts occupying a CPU from a time unit in which the first signaling is received, and ceases occupying the CPU in a time unit in which reporting is ceased; or each first CSI report starts occupying a CPU from a time unit in which the reference signal resource indicated by the first signaling takes effect, and ceases occupying the CPU in a time unit in which reporting is ceased.

Optionally, in another possible implementation of this embodiment of this application, after the foregoing step 101, the CPU occupancy determining method provided in this embodiment of this application may further include the following step 104 and step 105.

Step 104: The terminal receives second signaling.

In this embodiment of this application, the second signaling is used to adjust a reference signal resource associated with the second CSI report.

Optionally, in this embodiment of this application, the second signaling may be layer 1 or layer 2 signaling.

Step 105: The terminal determines, based on the second signaling, the CPU occupancy required for the second CSI report.

Optionally, in this embodiment of this application, the CPU occupancy includes the time period of the CPU occupancy; and the second CSI report starts occupying a CPU from a time unit in which the second signaling is received, and ceases occupying the CPU in a time unit in which reporting of the second CSI report is ceased; or the second CSI report starts occupying a CPU from a time unit in which the reference signal resource indicated by the second signaling takes effect, and ceases occupying the CPU in a time unit in which reporting of the second CSI report is ceased.

The following uses a specific implementation as an example.

Implementation 5

FIG. 13 is a schematic diagram illustrating a terminal determining CPU occupancy required for a target CSI report. In comparison with the foregoing implementation 1, the set ID is not changed, but the resource set is configured with a plurality of spatial adaptation patterns (corresponding to different port quantities) in advance by using RRC signaling, and a spatial adaptation pattern corresponding to the set may be updated or triggered (triggered) by using downlink control information (Downlink Control Information, DCI). As shown in FIG. 11, in a slot 5, a set 1 (16 ports) is triggered to be updated to 8 ports, and the update takes effect in a slot 6. A CSI report starts occupying a CPU from a sending time of the set corresponding to the spatial adaptation pattern, and the occupancy continues until reporting of the CSI report is ceased, that is, the CSI report starts occupying the CPU from the slot 6, and ceases occupying the CPU in a slot 11.

Certainly, after the terminal determines the CPU occupancy required for the target CSI report, a quantity of CPUs in a time unit (for example, an OFDM symbol) may be insufficient. In this case, the terminal may choose not to update some CSI reporting or CSI reports. Details are described below by using an example.

Optionally, in this embodiment of this application, after the foregoing step 101, the CPU occupancy determining method provided in this embodiment of this application may further include the following step 201.

Step 201: In a fifth time unit, in a case that a quantity of unoccupied CPUs of the terminal is insufficient, the terminal performs at least one of the following steps:

    (a) The terminal does not update N-M first CSI reports in the at least two first CSI reports in the fifth time unit.

    (b) In a case that a CSI report in the second CSI report meets a CSI sharing condition, the terminal does not update the second CSI report in the fifth time unit.

    (c) In a case that at least part of the first CSI reports in the at least two first CSI reports in the second CSI report meet a CSI sharing condition, the terminal does not update Q first CSI reports in the at least part of the first CSI reports in the fifth time unit.

In this embodiment of this application, N is a quantity of first CSI reports that the terminal expects to report in the fifth time unit.

It may be understood that in the foregoing step (a), the terminal may discard the first CSI reports based on each first report sub-configuration, that is, in the fifth time unit, the terminal may not calculate the N-M first CSI reports, or may discard the N-M first CSI reports.

Optionally, in this embodiment of this application, the fifth time unit may be any one of the following: a slot, an OFDM symbol, a subframe, and the like.

Optionally, in this embodiment of this application, M is a maximum value that meets a maximum quantity of CPUs allowed to be occupied by the terminal, and M is determined based on a first algorithm; and the first algorithm is

$$\sum_{n=0}^{M-1} O_{CPU}^{(n)} \leq N_{CPU} - L,$$

where

$O_{CPU}^{(n)}$ is a quantity of CPUs occupied by an $n^{th}$ first CSI report, $N_{CPU}$ is the maximum quantity of CPUs allowed to be occupied by the terminal, L is a quantity of CPUs occupied by the terminal in the fifth time unit, and n is an integer greater than or equal to 0.

Optionally, in this embodiment of this application, the N-M first CSI reports are N-M CSI reports with a lowest first priority in the at least two first CSI reports.

It should be noted that after the foregoing step (a) is performed, if the quantity of unoccupied CPUs of the terminal is still insufficient in the fifth time unit, the terminal may further perform step (a) for many times, or may perform at least one of step (b) and step (c), until the quantity of unoccupied CPUs of the terminal is sufficient in the fifth time unit.

In this embodiment of this application, M is a positive integer.

It should be noted that "CSI sharing" may be understood as: when a plurality of CSI reports are reported, one or more of a PMI, an RI, an LI, a channel state information reference signal resource indicator (CSI-RS resource indicator, CRI), a synchronization signal block resource indicator (SSB Resource Indicator, SSB RI), and a CQI in the plurality of CSI reports are reported only once.

Optionally, in this embodiment of this application, the meeting a CSI sharing condition may include at least one of the following:

CSI sharing is configured by the network-side device; and
a sharing condition configured by the network-side device is met.

The sharing condition may include at least one of the following: the CQI is greater than or equal to a first threshold, and CQI*RI*R is greater than a second threshold, where R is a code rate.

It may be understood that in the foregoing step (b), the terminal may discard the entire second CSI report based on whether CSI reports corresponding to the at least two first report sub-configurations are compressed, that is, in the fifth time unit, the terminal may not calculate the second CSI report, or may discard the second CSI report.

It should be noted that after the foregoing step (b) is performed, if the quantity of unoccupied CPUs of the terminal is still insufficient in the fifth time unit, the terminal may further perform at least one of step (a) and step (c), until the quantity of unoccupied CPUs of the terminal is sufficient in the fifth time unit.

For example, after the terminal does not update the second CSI report, if the quantity of unoccupied CPUs of the terminal is still insufficient in the fifth time unit, the terminal may not update Y first CSI reports with the lowest first priority in the at least two first CSI reports. Y is a maximum value meeting a CPU occupancy requirement. For the description of a method for determining Y, refer to the detailed description of the method for determining M in the foregoing embodiment.

In this embodiment of this application, Q is a positive integer.

Optionally, in this embodiment of this application, at least one of the first CSI reports is Q CSI reports with a lowest first priority in the at least part of the first CSI reports.

It should be noted that after the foregoing step (c) is performed, if the quantity of unoccupied CPUs of the terminal is still insufficient in the fifth time unit, the terminal may further perform step (c) for many times, or may perform at least one of step (a) and step (b), until the quantity of unoccupied CPUs of the terminal is sufficient in the fifth time unit.

It should be noted that in this embodiment of this application, the terminal transmitting the at least two first CSI reports and/or the second CSI report in the fifth time unit is used as an example to illustrate how the terminal does not update the CSI report. If the terminal further transmits other CSI reports or other CSI reporting in the fifth time unit, the terminal may further not update the CSI reports according to the foregoing step (a) to step (c), that is, the terminal may not update the CSI reports of the sub-configurations per sub-configuration, and/or the terminal may not update the CSI reports corresponding to the entire CSI report configuration based on whether the CSI reports corresponding to the CSI report configuration are compressed, and/or the terminal may not update or discard CSI reports corresponding to some sub-configurations in a second CSI report configuration based on whether the CSI reports corresponding to the CSI report configuration are compressed. The second CSI report configuration may be a CSI report configuration with a lowest priority in CSI report configurations.

Optionally, in this embodiment of this application, the first priority is related to at least one of the following:

an identifier ID of a report sub-configuration corresponding to the first CSI report;
an identifier ID of a CSI report configuration to which the report sub-configuration corresponding to the first CSI report belongs; and
a value of a third parameter in the report sub-configuration corresponding to the first CSI report, where
in this embodiment of this application, the third parameter includes at least one of the following: a power offset value of an associated CSI-RS resource relative to a PDSCH, and a quantity of ports of the associated CSI-RS resource.

It may be understood that a first priority of each first CSI report is related to an identifier ID of the report sub-configuration corresponding to each first CSI report.

For example, assuming that the at least two first CSI reports include a CSI report 1 and a CSI report 2, a first priority of the CSI report 1 is related to an identifier ID of a report sub-configuration corresponding to the CSI report 1, and a first priority of the CSI report 2 is related to an identifier ID of a report sub-configuration corresponding to the CSI report 2.

It may be understood that the first priority of each first CSI report is related to an identifier ID of a CSI report configuration of a report sub-configuration corresponding to each first CSI report.

It may be understood that the first priority of each first CSI report is related to a value of a third parameter in the report sub-configuration corresponding to the first CSI report.

Optionally, in this embodiment of this application, in a case that the third parameter includes the power offset value of the associated CSI-RS resource relative to the PDSCH, the greater the power offset value, the higher the first priority. In a case that the third parameter includes the quantity of ports of the associated CSI-RS resource, the greater the port quantity, the higher the first priority.

The following uses specific implementations as examples.

Implementation 6

It is assumed that one second CSI report (for example, CSI report #1) includes CSI #0 with 32 ports and CSI #1 with 16 ports, and that another second CSI report (for example, CSI report #2) includes CSI #2 with 16 ports and CSI #3 with 8 ports. If sorted according to an existing priority calculation formula, a priority of CSI report #1 is higher than a priority of CSI report #2. Therefore, priorities of CSI #0 and CSI #1 are higher than priorities of CSI #2 and CSI #3. For a plurality of CSI reports belonging to a same CSI report configuration, priorities are arranged based on values of parameters included in sub-configurations. For example, the larger the port quantity, the higher the priority. In this case, the priority of CSI #0 is higher than the priority of CSI #1. Similarly, the priority of CSI #2 is higher than the priority of CSI #3.

Therefore, a final priority order is CSI #0 > CSI #1 > CSI #2 > CSI #3.

When a quantity of CPUs is insufficient or resources for reporting uplink CSI are insufficient at a time of an OFDM symbol, CSI reports are discarded per sub-configuration. In this case, CPUs occupied by CSI #2 and CSI #3 reports are released based on an assumption that a requirement of a maximum allowable CPU quantity can be met after the CPUs occupied by the CSI #2 and CSI #3 reports are released.

It should be noted that, in this implementation, CSI #X refers to a first CSI report numbered X and corresponding to a sub-configuration.

Implementation 7

It is assumed that one second CSI report (for example, CSI report #1) and another second CSI report (for example, CSI report #2) respectively include a plurality of CSI reports corresponding to sub-configurations, where the plurality of CSI reports are not subject to CSI sharing. Other second CSI reports (for example, CSI report #3 and CSI report #4) also include a plurality of CSI reports corresponding to sub-configurations, where the plurality of CSI reports are subject to CSI sharing (for example, a PMI in CSI reports corresponding to a plurality of sub-configurations needs to be reported only once, and other CSI fields still need to be reported multiple times). When a quantity of CPUs is insufficient:

CPUs occupied by CSI report #3 and CSI report #4 may be released preferentially. For release priorities of the plurality of CSI reports, refer to the priorities of CSI report configurations.

Alternatively, CPUs occupied by CSI reports may be released based on a granularity of a sub-configuration, that is, CSI reports corresponding to a plurality of sub-configurations in CSI report #3 (including CSI #7 (occupying one CPU) and CSI #8 (occupying two CPUs)) and CSI report #4 (including CSI #9 (occupying one CPU) and CSI #10 (occupying two CPUs)) are sorted based on priorities, assuming that CSI #7 > CSI #9 > CSI #8 > CSI #10.

If CPUs are insufficient for a current OFDM symbol, CPUs occupied by CSI reports corresponding to fewest sub-configurations are released while the maximum allowable CPU quantity is met. Which of the plurality of CSI reports are subject to CPU release depends on priorities of CSI reports corresponding to different sub-configurations. Assuming that only four CPUs are available currently, CSI #7 (1 CPU), CSI#9 (1 CPU), and CSI #8 (2 CPUs) can be reported, but CSI #10 is not updated and calculated temporarily.

It should be noted that, in this implementation, CSI #X refers to a CSI report numbered X and corresponding to a sub-configuration.

The CPU occupancy determining method provided in the embodiments of this application may be performed by a CPU occupancy determining apparatus. A CPU occupancy determining apparatus provided in the embodiments of this application is described by assuming that the CPU occupancy determining method in the embodiments of this application is performed by the CPU occupancy determining apparatus.

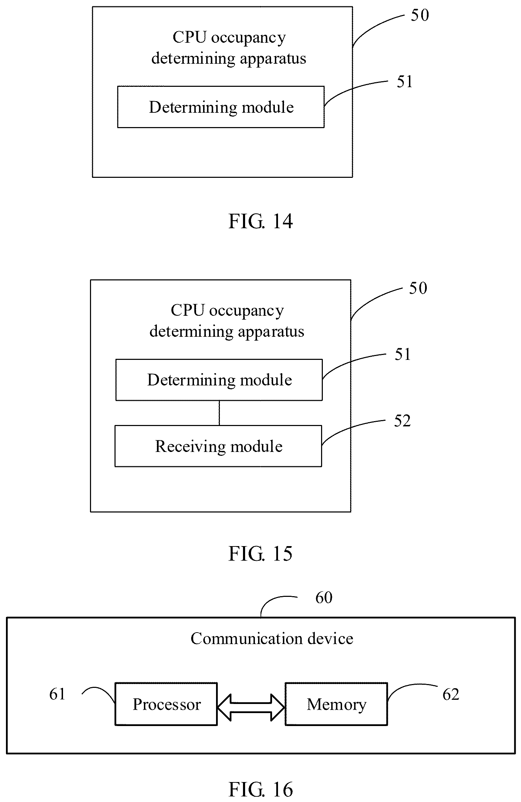

FIG. 14 is a schematic diagram of a possible structure of a CPU occupancy determining apparatus according to an embodiment of this application. As shown in FIG. 14, the CPU occupancy determining apparatus 50 includes a determining module 51.

The determining module 51 is configured to determine, based on at least two first report sub-configurations in a target CSI report configuration, CPU occupancy required for a target CSI report, where the target CSI report includes at least one of the following: at least two first CSI reports and a second CSI report, where each first CSI report is a CSI report performed by the CPU occupancy determining apparatus 50 based on one of the first report sub-configurations, and each first CSI report corresponds to one spatial adaptation pattern; the second CSI report is a CSI report performed by the CPU occupancy determining apparatus 50 based on the at least two first report sub-configurations, and the second CSI report corresponds to at least two spatial adaptation patterns; and the CPU occupancy includes at least one of the following: a time period of the CPU occupancy and a quantity of occupied CPUs.

In a possible implementation, the CPU occupancy includes the time period of the CPU occupancy; and each first CSI report starts occupying a CPU from a corresponding first time unit, and ceases occupying the CPU in a corresponding second time unit, where each first time unit is related to a reference signal resource associated with the corresponding first report sub-configuration; and each second time unit is related to a time domain position of the corresponding first CSI report.

In a possible implementation, each first time unit includes any one of the following: a time unit in which an earliest sending time of the reference signal resource associated with the first report sub-configuration corresponding to the first CSI report is located; a time unit in which an earliest sending time of a reference signal resource set associated with the first report sub-configuration corresponding to the first CSI report is located; and a time unit in which a first object corresponding to a reference signal resource configuration associated with the first report sub-configuration corresponding to the first CSI report is located, where the first object includes at least one of the following: a reference signal resource set with an earliest sending time and a reference signal resource with an earliest sending time.

In a possible implementation, each second time unit is a time unit in which reporting of the corresponding first CSI report is ceased.

In a possible implementation, the CPU occupancy includes the quantity of occupied CPUs; and a quantity of CPUs occupied by each first CSI report is related to a quantity of resources in a resource set that is used for channel measurement and associated with the corresponding first report sub-configuration.

In a possible implementation, with reference to FIG. 14, as shown in FIG. 15, the CPU occupancy determining apparatus 50 provided in this embodiment of this application may further include a receiving module 52. The receiving module 52 is configured to receive first signaling, where the first signaling is used to adjust a reference signal resource associated with each first CSI report. The determining module 51 is further configured to determine, based on the first signaling received by the receiving module 52, CPU occupancy required for each first CSI report.

In a possible implementation, the CPU occupancy includes the time period of the CPU occupancy; and each first CSI report starts occupying a CPU from a time unit in which the first signaling is received, and ceases occupying the CPU in a time unit in which reporting is ceased; or each first CSI report starts occupying a CPU from a time unit in which the reference signal resource indicated by the first signaling takes effect, and ceases occupying the CPU in a time unit in which reporting is ceased.

In a possible implementation, the at least two first report sub-configurations are activated report sub-configurations in the target CSI report configuration; and the CPU occupancy includes the time period of the CPU occupancy; and the second CSI report starts occupying a CPU from a third time unit, and ceases occupying the CPU in a fourth time unit, where the third time unit is related to reference signal resources associated with the at least two first report sub-configurations; and the fourth time unit is related to a time domain position of the second CSI report.

In a possible implementation, the third time unit includes any one of the following: a time unit in which an earliest sending time of the reference signal resources associated with the at least two first report sub-configurations is located; a time unit in which an earliest sending time of reference signal resource sets associated with the at least two first report sub-configurations is located; and a time unit in which a second object corresponding to reference signal resource configurations associated with the at least two first report sub-configurations is located, where the second object includes at least one of the following: a reference signal resource set with an earliest sending time and a reference signal resource with an earliest sending time.

In a possible implementation, the fourth time unit is a time unit in which reporting of the second CSI report is ceased.

In a possible implementation, the at least two first report sub-configurations are activated report sub-configurations in the target CSI report configuration; and the CPU occupancy includes the quantity of occupied CPUs; and a quantity of CPUs occupied by the second CSI report is related to quantities of resources in resource sets that are used for channel measurement and associated with the at least two activated first report sub-configurations.

In a possible implementation, the quantity of CPUs occupied by the second CSI report is determined based on the quantities of resources in the resource sets that are used for channel measurement and associated with the at least two activated first report sub-configurations, and at least two scaling factors; and the at least two first report sub-configurations are in a one-to-one correspondence with the at least two scaling factors.

In a possible implementation, the at least two first report sub-configurations are activated report sub-configurations in the target CSI report configuration; and the CPU occupancy includes the quantity of occupied CPUs; and in a case that the second CSI report is used to report a first parameter, a quantity of CPUs occupied by the second CSI report is determined based on a quantity of the first report sub-configurations included in the second CSI report, where the first parameter includes at least one of the following: RSRP and an SINR.

In a possible implementation, with reference to FIG. 14, as shown in FIG. 15, the CPU occupancy determining apparatus 50 provided in this embodiment of this application may further include a receiving module 52. The receiving module 52 is configured to receive second signaling, where the second signaling is used to adjust a reference signal resource associated with the second CSI report. The determining module 51 is further configured to determine, based on the second signaling received by the receiving module 52, CPU occupancy required for the second CSI report.

In a possible implementation, the CPU occupancy includes the time period of the CPU occupancy; and the second CSI report starts occupying a CPU from a time unit in which the second signaling is received, and ceases occupying the CPU in a time unit in which reporting of the second CSI report is ceased; or the second CSI report starts occupying a CPU from a time unit in which the reference signal resource indicated by the second signaling takes effect, and ceases occupying the CPU in a time unit in which reporting of the second CSI report is ceased.

In a possible implementation, the CPU occupancy determining apparatus 50 provided in this embodiment of this application may further include an execution module. The execution module is configured to perform at least one of the following steps in a case that a quantity of unoccupied CPUs of the CPU occupancy determining apparatus 50 is insufficient in a fifth time unit: not updating N-M first CSI reports in the at least two first CSI reports in the fifth time unit; in a case that a CSI report in the second CSI report meets a CSI sharing condition, not updating the second CSI report in the fifth time unit; and in a case that at least part of the first CSI reports in the at least two first CSI reports in the second CSI report meet a CSI sharing condition, not updating Q first CSI reports in the at least part of the first CSI reports in the fifth time unit, where N is a quantity of first CSI reports that the CPU occupancy determining apparatus 50 expects to report in the fifth time unit, M is a positive integer, and Q is a positive integer.

In a possible implementation, M is a maximum value that meets a maximum quantity of CPUs allowed to be occupied by the CPU occupancy determining apparatus 50, and M is determined based on a first algorithm; and the first algorithm is $\sum_{n=0}^{M-1} O_{CPU}^{(n)} \leq N_{CPU} - L$,

where $O_{CPU}^{(n)}$ is quantity of CPUs occupied by an $n$th first CSI report, $N_{CPU}$ is the maximum quantity of CPUs allowed to be occupied by the CPU occupancy determining apparatus 50, L is a quantity of CPUs occupied by the CPU occupancy determining apparatus 50 in the fifth time unit, and n is an integer greater than or equal to 0.

In a possible implementation, the N-M first CSI reports are N-M CSI reports with a lowest first priority in the at least two first CSI reports.

In a possible implementation, at least one of the first CSI reports is Q CSI reports with a lowest first priority in the at least part of the first CSI reports.

In a possible implementation, the first priority is related to at least one of the following: an identifier of a report sub-configuration corresponding to the first CSI report; an identifier of a CSI report configuration to which the report sub-configuration corresponding to the first CSI report belongs; and a value of a third parameter in the report sub-configuration corresponding to the first CSI report, where the third parameter includes at least one of the following: a power offset value of an associated CSI-RS resource relative to a PDSCH, and a quantity of ports of the associated CSI-RS resource.

According to the CPU occupancy determining apparatus provided in this embodiment of this application, because the CPU occupancy determining apparatus can determine CPU occupancy (that is, the time period of the CPU occupancy and the quantity of occupied CPUs) of at least one of the at least two first CSI reports and the second CSI report based on the at least two first report sub-configurations in the target CSI report configuration, that is, because the CPU occupancy determining apparatus can determine CPU occupancy of CSI reports corresponding to a plurality of first report sub-configurations in the target CSI report configuration, a technical problem in the related art that CPU occupancy of CSI reports corresponding to a plurality of sub-configurations in a CSI report configuration cannot be determined can be resolved.

The CPU occupancy determining apparatus in this embodiment of this application may be an electronic device, for example, an electronic device with an operating system, or may be a component in an electronic device, for example, an integrated circuit or a chip. The electronic device may be a terminal, or may be other devices than a terminal. For example, the terminal may include but is not limited to the foregoing illustrated type of the terminal 11. The other devices may be a server, a network attached storage (Network Attached Storage, NAS), and the like. This is not specifically limited in this embodiment of this application.

The CPU occupancy determining apparatus provided in this embodiment of this application can implement each process implemented in the method embodiments in FIG. 2 to FIG. 13, with the same technical effect achieved. To avoid repetition, details are not described herein again.

As shown in FIG. 16, an embodiment of this application further provides a communication device 60, including a processor 61 and a memory 62, where the memory 62 stores a program or instructions capable of running on the processor 61. For example, when the communication device 60 is a terminal, and the program or instructions are executed by the processor 61, the steps of the foregoing embodiment of the CPU occupancy determining method are implemented, with the same technical effect achieved. To avoid repetition, details are not described herein again.

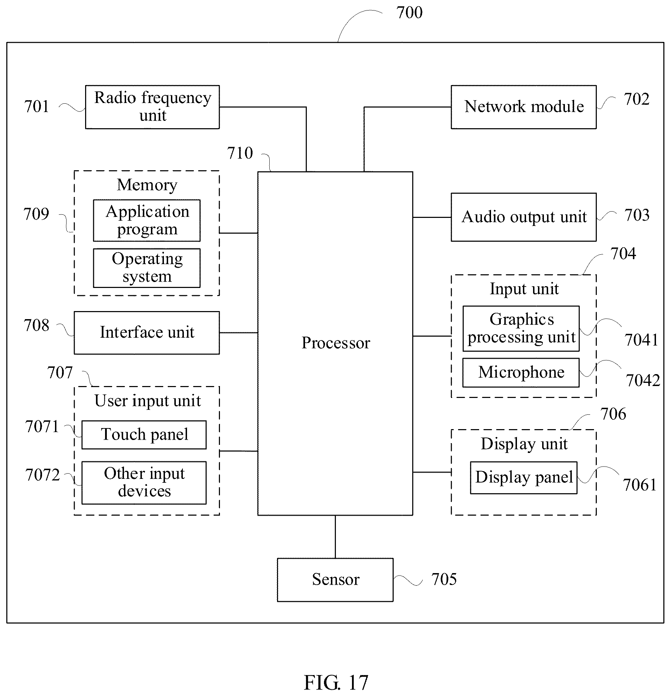

An embodiment of this application further provides a terminal, including a processor and a communication interface. The communication interface is coupled to the processor. The processor is configured to run a program or instructions to implement the steps in the method embodiment shown in FIG. 2. The terminal embodiment corresponds to the foregoing terminal-side method embodiment, and each implementation process and implementation of the foregoing method embodiment can be applied to the terminal embodiment, with the same technical effect achieved. Specifically, FIG. 17 is a schematic diagram of a hardware structure of a terminal for implementing an embodiment of this application.

The terminal 700 includes but is not limited to at least some components such as a radio frequency unit 701, a network module 702, an audio output unit 703, an input unit 704, a sensor 705, a display unit 706, a user input unit 707, an interface unit 708, a memory 709, and a processor 710.

A person skilled in the art may understand that the terminal 700 may further include a power supply (for example, a battery) supplying power to all components. Optionally, the power supply may be logically connected to the processor 710 through a power management system. In this way, functions such as charge management, discharge management, and power consumption management are implemented by using the power management system. The terminal structure shown in FIG. 17 does not constitute a limitation on the terminal. The terminal may include more or fewer components than those shown in the figure, or some components are combined, or component arrangements are different. Details are not described herein again.

It should be understood that, in this embodiment of this application, the input unit 704 may include a graphics processing unit (Graphics Processing Unit, GPU) 7041 and a microphone 7042. The graphics processing unit 7041 processes image data of a still picture or video obtained by an image capture apparatus (such as a camera) in a video capture mode or an image capture mode. The display unit 706 may include a display panel 7061, and the display panel 7061 may be configured in a form of a liquid crystal display, an organic light-emitting diode, or the like. The user input unit 707 includes at least one of a touch panel 7071 and other input devices 7072. The touch panel 7071 is also referred to as a touchscreen. The touch panel 7071 may include two parts: a touch detection apparatus and a touch controller. The other input devices 7072 may include but are not limited to a physical keyboard, a function button (such as a volume control button or a power button), a trackball, a mouse, and a joystick. Details are not described herein again.

In this embodiment of this application, after receiving downlink data from a network-side device, the radio frequency unit 701 may transmit the downlink data to the processor 710 for processing. In addition, the radio frequency unit 701 may send uplink data to the network-side device. Usually, the radio frequency unit 701 includes but is not limited to an antenna, an amplifier, a transceiver, a coupler, a low noise amplifier, a duplexer, and the like.

The memory 709 may be configured to store software programs or instructions and various data. The memory 709 may primarily include a first storage area for storing programs or instructions and a second storage area for storing data. The first storage area may store an operating system, an application program or instructions required by at least one function (such as an audio play function and an image play function), and the like. In addition, the memory 709 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data rate SDRAM, DDR SDRAM), an enhanced synchronous dynamic random access memory (Enhanced SDRAM, ESDRAM), a synchlink dynamic random access memory (Synch Link DRAM, SLDRAM), and a direct rambus random access memory (Direct Rambus RAM, DRRAM). The memory 709 in this embodiment of this application includes but is not limited to these and any other suitable types of memories.

The processor 710 may include one or more processing units. Optionally, the processor 710 integrates an application processor and a modem processor. The application processor mainly processes operations related to the operating system, a user interface, an application program, and the like. The modem processor mainly processes a wireless communication signal. For example, the modem processor is a baseband processor. It may be understood that the modem processor may alternatively be not integrated in the processor 710.

The processor 710 is configured to determine, based on at least two first report sub-configurations in a target CSI report configuration, CPU occupancy required for a target CSI report, where the target CSI report includes at least one of the following: at least two first CSI reports and a second CSI report, where

each first CSI report is a CSI report performed by the terminal based on one of the first report sub-configurations, and each first CSI report corresponds to one spatial adaptation pattern; the second CSI report is a CSI report performed by the terminal based on the at least two first report sub-configurations, and the second CSI report corresponds to at least two spatial adaptation patterns; and the CPU occupancy includes at least one of the following: a time period of the CPU occupancy and a quantity of occupied CPUs.

According to the terminal provided in this embodiment of this application, because the terminal can determine CPU occupancy (that is, the time period of the CPU occupancy and the quantity of occupied CPUs) of at least one of the at least two first CSI reports and the second CSI report based on the at least two first report sub-configurations in the target CSI report configuration, that is, because the terminal can determine CPU occupancy of CSI reports corresponding to a plurality of first report sub-configurations in the target CSI report configuration, a technical problem in the related art that CPU occupancy of CSI reports corresponding to a plurality of sub-configurations in a CSI report configuration cannot be determined can be resolved.

Optionally, in this embodiment of this application, the CPU occupancy includes the time period of the CPU occupancy; and each first CSI report starts occupying a CPU from a corresponding first time unit, and ceases occupying the CPU in a corresponding second time unit, where

each first time unit is related to a reference signal resource associated with the corresponding first report sub-configuration; and each second time unit is related to a time domain position of the corresponding first CSI report.

Optionally, in this embodiment of this application, each first time unit includes any one of the following: a time unit in which an earliest sending time of the reference signal resource associated with the first report sub-configuration corresponding to the first CSI report is located; a time unit in which an earliest sending time of a reference signal resource set associated with the first report sub-configuration corresponding to the first CSI report is located; and a time unit in which a first object corresponding to a reference signal resource configuration associated with the first report sub-configuration corresponding to the first CSI report is located, where

the first object includes at least one of the following: a reference signal resource set with an earliest sending time and a reference signal resource with an earliest sending time.

Optionally, in this embodiment of this application, each second time unit is a time unit in which reporting of the corresponding first CSI report is ceased.

Optionally, in this embodiment of this application, the CPU occupancy includes the quantity of occupied CPUs; and a quantity of CPUs occupied by each first CSI report is related to a quantity of resources in a resource set that is used for channel measurement and associated with the corresponding first report sub-configuration.

Optionally, in this embodiment of this application, the radio frequency unit 701 is configured to receive first signaling, where the first signaling is used to adjust a reference signal resource associated with each first CSI report; and

the processor 710 is further configured to determine, based on the first signaling, CPU occupancy required for each first CSI report.

Optionally, in this embodiment of this application, the CPU occupancy includes the time period of the CPU occupancy; and each first CSI report starts occupying a CPU from a time unit in which the first signaling is received, and ceases occupying the CPU in a time unit in which reporting is ceased; or each first CSI report starts occupying a CPU from a time unit in which the reference signal resource indicated by the first signaling takes effect, and ceases occupying the CPU in a time unit in which reporting is ceased.

Optionally, in this embodiment of this application, the at least two first report sub-configurations are activated report sub-configurations in the target CSI report configuration; and the CPU occupancy includes the time period of the CPU occupancy; and the second CSI report starts occupying a CPU from a third time unit, and ceases occupying the CPU in a fourth time unit, where the third time unit is related to reference signal resources associated with the at least two first report sub-configurations; and the fourth time unit is related to a time domain position of the second CSI report.

Optionally, in this embodiment of this application, the third time unit includes any one of the following: a time unit in which an earliest sending time of the reference signal resources associated with the at least two first report sub-configurations is located; a time unit in which an earliest sending time of reference signal resource sets associated with the at least two first report sub-configurations is located; and a time unit in which a second object corresponding to reference signal resource configurations associated with the at least two first report sub-configurations is located, where

the second object includes at least one of the following: a reference signal resource set with an earliest sending time and a reference signal resource with an earliest sending time.

Optionally, in this embodiment of this application, the fourth time unit is a time unit in which reporting of the second CSI report is ceased.

Optionally, in this embodiment of this application, the at least two first report sub-configurations are activated report sub-configurations in the target CSI report configuration; and the CPU occupancy includes the quantity of occupied CPUs; and a quantity of CPUs occupied by the second CSI report is related to quantities of resources in resource sets that are used for channel measurement and associated with the at least two activated first report sub-configurations.

Optionally, in this embodiment of this application, the quantity of CPUs occupied by the second CSI report is determined based on the quantities of resources in the resource sets that are used for channel measurement and associated with the at least two activated first report sub-configurations, and at least two scaling factors; and

the at least two first report sub-configurations are in a one-to-one correspondence with the at least two scaling factors.

Optionally, in this embodiment of this application, the at least two first report sub-configurations are activated report sub-configurations in the target CSI report configuration; and the CPU occupancy includes the quantity of occupied CPUs; and in a case that the second CSI report is used to report a first parameter, a quantity of CPUs occupied by the second CSI report is determined based on a quantity of the first report sub-configurations included in the second CSI report, where

the first parameter includes at least one of the following: RSRP and an SINR.

Optionally, in this embodiment of this application, the radio frequency unit 701 is configured to receive second signaling, where the second signaling is used to adjust a reference signal resource associated with the second CSI report; and

the processor 710 is further configured to determine, based on the second signaling, CPU occupancy required for the second CSI report.

Optionally, in this embodiment of this application, the CPU occupancy includes the time period of the CPU occupancy; and the second CSI report starts occupying a CPU from a time unit in which the second signaling is received, and ceases occupying the CPU in a time unit in which reporting of the second CSI report is ceased; or the second CSI report starts occupying a CPU from a time unit in which the reference signal resource indicated by the second signaling takes effect, and ceases occupying the CPU in a time unit in which reporting of the second CSI report is ceased.

Optionally, in this embodiment of this application, the processor 710 is further configured to perform at least one of the following steps in a case that a quantity of unoccupied CPUs of the terminal is insufficient in a fifth time unit:

not updating N-M first CSI reports in the at least two first CSI reports in the fifth time unit;
in a case that a CSI report in the second CSI report meets a CSI sharing condition, not updating the second CSI report in the fifth time unit; and
in a case that at least part of the first CSI reports in the at least two first CSI reports in the second CSI report meet a CSI sharing condition, not updating Q first CSI reports in the at least part of the first CSI reports in the fifth time unit, where
N is a quantity of first CSI reports that the terminal expects to report in the fifth time unit, M is a positive integer, and Q is a positive integer.

Optionally, in this embodiment of this application, M is a maximum value that meets a maximum quantity of CPUs allowed to be occupied by the terminal, and M is determined based on a first algorithm; and the first algorithm is

$$\sum_{n=0}^{M-1} O_{CPU}^{(n)} \le N_{CPU} - L,$$

where

$O_{CPU}^{(n)}$ is a quantity of CPUs occupied by an $n^{th}$ first CSI report, $N_{CPU}$ is the maximum quantity of CPUs allowed to be occupied by the terminal, L is a quantity of CPUs occupied by the terminal in the fifth time unit, and n is an integer greater than or equal to 0.

Optionally, in this embodiment of this application, the N-M first CSI reports are N-M CSI reports with a lowest first priority in the at least two first CSI reports.

Optionally, in this embodiment of this application, at least one of the first CSI reports is Q CSI reports with a lowest first priority in the at least part of the first CSI reports.

Optionally, in this embodiment of this application, the first priority is related to at least one of the following:

an identifier of a report sub-configuration corresponding to the first CSI report;
an identifier of a CSI report configuration to which the report sub-configuration corresponding to the first CSI report belongs; and
a value of a third parameter in the report sub-configuration corresponding to the first CSI report, where
the third parameter includes at least one of the following: a power offset value of an associated CSI-RS resource relative to a physical downlink shared channel PDSCH, and a quantity of ports of the associated CSI-RS resource.

It may be understood that for the implementation process of each implementation in this embodiment, reference may be made to the related descriptions in the CPU occupancy determining method in the method embodiment, with the same or corresponding technical effect achieved. To avoid repetition, details are not described herein again.

An embodiment of this application further provides a readable storage medium. The readable storage medium stores a program or instructions. When the program or instructions are executed by a processor, each process of the foregoing embodiment of the CPU occupancy determining method is implemented, with the same technical effect achieved. To avoid repetition, details are not described herein again.

The processor is a processor in the terminal in the foregoing embodiment. The readable storage medium includes a computer-readable storage medium, such as a computer read-only memory ROM, a random access memory RAM, a magnetic disk, or an optical disc. In some examples, the readable storage medium may be a non-transitory readable storage medium.

In addition, an embodiment of this application provides a chip. The chip includes a processor and a communication interface. The communication interface is coupled to the processor. The processor is configured to run a program or instructions to implement each process of the foregoing embodiment of the CPU occupancy determining method, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program or program product. The computer program or program product is stored in a storage medium. The computer program or program product is executed by at least one processor to implement each process of the foregoing embodiment of the CPU occupancy determining method, with the same technical effect achieved. To avoid repetition, details are not described herein again.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

Based on the foregoing descriptions of the implementations, a person skilled in the art may clearly understand that the foregoing embodiment methods can be implemented by using a computer software product in combination with a necessary general hardware platform, or by using hardware only. The computer software product is stored in a storage medium (such as a ROM, a RAM, a magnetic disk, or an optical disc), and includes several instructions for instructing a terminal or a network-side device to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners of embodiments without departing from principles of this application and the protection scope of the claims, and all such manners of embodiments fall within the protection scope of this application.

**Claims**

1. A channel state information processing unit CPU occupancy determining method, comprising:

   determining, by a terminal based on at least two first report sub-configurations in a target channel state information CSI report configuration, CPU occupancy required for a target CSI report, wherein the target CSI report comprises at least one of the following: at least two first CSI reports and a second CSI report, wherein
   each first CSI report is a CSI report performed by the terminal based on one of the first report sub-configurations, and each first CSI report corresponds to one spatial adaptation pattern;
   the second CSI report is a CSI report performed by the terminal based on the at least two first report sub-configurations, and the second CSI report corresponds to at least two spatial adaptation patterns; and
   the CPU occupancy comprises at least one of the following: a time period of the CPU occupancy and a quantity of occupied CPUs.

2. The method according to claim 1, wherein the CPU occupancy comprises the time period of the CPU occupancy; and

   each first CSI report starts occupying a CPU from a corresponding first time unit, and ceases occupying the CPU in a corresponding second time unit, wherein
   each first time unit is related to a reference signal resource associated with the corresponding first report sub-configuration; and each second time unit is related to a time domain position of the corresponding first CSI report.

3. The method according to claim 2, wherein each first time unit comprises any one of the following:

   a time unit in which an earliest sending time of the reference signal resource associated with the first report sub-configuration corresponding to the first CSI report is located;
   a time unit in which an earliest sending time of a reference signal resource set associated with the first report sub-configuration corresponding to the first CSI report is located; and
   a time unit in which a first object corresponding to a reference signal resource configuration associated with the first report sub-configuration corresponding to the first CSI report is located, wherein
   the first object comprises at least one of the following: a reference signal resource set with an earliest sending time and a reference signal resource with an earliest sending time.

4. The method according to claim 2, wherein each second time unit is a time unit in which reporting of the corresponding first CSI report is ceased.

5. The method according to claim 1, wherein the CPU occupancy comprises the quantity of occupied CPUs; and
a quantity of CPUs occupied by each first CSI report is related to a quantity of resources in a resource set that is used for channel measurement and associated with the corresponding first report sub-configuration.

6. The method according to any one of claims 2 to 5, wherein the method further comprises:

receiving, by the terminal, first signaling, wherein the first signaling is used to adjust a reference signal resource associated with each first CSI report; and
determining, by the terminal based on the first signaling, CPU occupancy required for each first CSI report.

7. The method according to claim 6, wherein the CPU occupancy comprises the time period of the CPU occupancy; and

each first CSI report starts occupying a CPU from a time unit in which the first signaling is received, and ceases occupying the CPU in a time unit in which reporting is ceased; or
each first CSI report starts occupying a CPU from a time unit in which the reference signal resource indicated by the first signaling takes effect, and ceases occupying the CPU in a time unit in which reporting is ceased.

8. The method according to claim 1, wherein the at least two first report sub-configurations are activated report sub-configurations in the target CSI report configuration; and the CPU occupancy comprises the time period of the CPU occupancy; and

the second CSI report starts occupying a CPU from a third time unit, and ceases occupying the CPU in a fourth time unit, wherein
the third time unit is related to reference signal resources associated with the at least two first report sub-configurations; and the fourth time unit is related to a time domain position of the second CSI report.

9. The method according to claim 8, wherein the third time unit comprises any one of the following:

a time unit in which an earliest sending time of the reference signal resources associated with the at least two first report sub-configurations is located;
a time unit in which an earliest sending time of reference signal resource sets associated with the at least two first report sub-configurations is located; and
a time unit in which a second object corresponding to reference signal resource configurations associated with the at least two first report sub-configurations is located, wherein
the second object comprises at least one of the following: a reference signal resource set with an earliest sending time and a reference signal resource with an earliest sending time.

10. The method according to claim 8, wherein the fourth time unit is a time unit in which reporting of the second CSI report is ceased.

11. The method according to claim 1, wherein the at least two first report sub-configurations are activated report sub-configurations in the target CSI report configuration; and the CPU occupancy comprises the quantity of occupied CPUs; and
a quantity of CPUs occupied by the second CSI report is related to quantities of resources in resource sets that are used for channel measurement and associated with the at least two activated first report sub-configurations.

12. The method according to claim 11, wherein the quantity of CPUs occupied by the second CSI report is determined based on the quantities of resources in the resource sets that are used for channel measurement and associated with the at least two activated first report sub-configurations, and at least two scaling factors; and
the at least two first report sub-configurations are in a one-to-one correspondence with the at least two scaling factors.

13. The method according to claim 1, wherein the at least two first report sub-configurations are activated report sub-configurations in the target CSI report configuration; and the CPU occupancy comprises the quantity of occupied CPUs; and

in a case that the second CSI report is used to report a first parameter, a quantity of CPUs occupied by the second CSI report is determined based on a quantity of the first report sub-configurations comprised in the second CSI report, wherein
the first parameter comprises at least one of the following: reference signal received power RSRP and a signal to interference plus noise ratio SINR.

**14.** The method according to any one of claims 8 to 13, wherein the method further comprises:

receiving, by the terminal, second signaling, wherein the second signaling is used to adjust a reference signal resource associated with the second CSI report; and
determining, by the terminal based on the second signaling, CPU occupancy required for the second CSI report.

**15.** The method according to claim 14, wherein the CPU occupancy comprises the time period of the CPU occupancy; and

the second CSI report starts occupying a CPU from a time unit in which the second signaling is received, and ceases occupying the CPU in a time unit in which reporting of the second CSI report is ceased; or
the second CSI report starts occupying a CPU from a time unit in which the reference signal resource indicated by the second signaling takes effect, and ceases occupying the CPU in a time unit in which reporting of the second CSI report is ceased.

**16.** The method according to claim 1, wherein the method further comprises:
in a fifth time unit, in a case that a quantity of unoccupied CPUs of the terminal is insufficient, performing, by the terminal, at least one of the following steps:

not updating, by the terminal, N-M first CSI reports in the at least two first CSI reports in the fifth time unit;
in a case that a CSI report in the second CSI report meets a CSI sharing condition, not updating, by the terminal, the second CSI report in the fifth time unit; and
in a case that at least part of the first CSI reports in the at least two first CSI reports in the second CSI report meet a CSI sharing condition, not updating, by the terminal, Q first CSI reports in the at least part of the first CSI reports in the fifth time unit, wherein
N is a quantity of first CSI reports that the terminal expects to report in the fifth time unit, M is a positive integer, and Q is a positive integer.

**17.** The method according to claim 16, wherein M is a maximum value that meets a maximum quantity of CPUs allowed to be occupied by the terminal, and M is determined based on a first algorithm; and the first algorithm is

$$\sum_{n=0}^{M-1} O_{CPU}^{(n)} \leq N_{CPU} - L,$$

wherein

$O_{CPU}^{(n)}$ is a quantity of CPUs occupied by an $n^{th}$ first CSI report, $N_{CPU}$ is the maximum quantity of CPUs allowed to be occupied by the terminal, L is a quantity of CPUs occupied by the terminal in the fifth time unit, and n is an integer greater than or equal to 0.

**18.** The method according to claim 16, wherein the N-M first CSI reports are N-M CSI reports with a lowest first priority in the at least two first CSI reports.

**19.** The method according to claim 16, wherein at least one of the first CSI reports is Q CSI reports with a lowest first priority in the at least part of the first CSI reports.

**20.** The method according to claim 18 or 19, wherein the first priority is related to at least one of the following:

an identifier of a report sub-configuration corresponding to the first CSI report;
an identifier of a CSI report configuration to which the report sub-configuration corresponding to the first CSI report belongs; and
a value of a third parameter in the report sub-configuration corresponding to the first CSI report, wherein
the third parameter comprises at least one of the following: a power offset value of an associated CSI-RS resource relative to a physical downlink shared channel PDSCH, and a quantity of ports of the associated CSI-RS resource.

**21.** A CPU occupancy determining apparatus, wherein the CPU occupancy determining apparatus comprises a determining module, wherein

the determining module is configured to determine, based on at least two first report sub-configurations in a target CSI report configuration, CPU occupancy required for a target CSI report, wherein the target CSI report comprises at least one of the following: at least two first CSI reports and a second CSI report, wherein
each first CSI report is a CSI report performed by the CPU occupancy determining apparatus based on one of the first report sub-configurations, and each first CSI report corresponds to one spatial adaptation pattern;
the second CSI report is a CSI report performed by the CPU occupancy determining apparatus based on the at least two first report sub-configurations, and the second CSI report corresponds to at least two spatial adaptation patterns; and

the CPU occupancy comprises at least one of the following: a time period of the CPU occupancy and a quantity of occupied CPUs.

22. A terminal, comprising a processor and a memory, wherein the memory stores a program or instructions capable of running on the processor, and when the program or instructions are executed by the processor, the steps of the CPU occupancy determining method according to any one of claims 1 to 20 are implemented.

23. A readable storage medium, wherein the readable storage medium stores a program or instructions, and when the program or instructions are executed by a processor, the steps of the CPU occupancy determining method according to any one of claims 1 to 20 are implemented.

12

Network-side
device

11

11

Terminal

Terminal

FIG. 1

A terminal determines, based on at least two first report sub-configurations in a target CSI report configuration, CPU occupancy required for a target CSI report

101

FIG. 2

FIG. 3

| 0 | 1 | 2 | 3 | 4 | 5 | 6 | 7 | 8 | 9 | 10 | 11 | 12 |

Set 32

Set 16

Set 32

Set 16

16-port CSI report

32-port CSI report and 16-port CSI report

32-port CSI report

PUCCH

PUCCH

PUCCH

(c)

(d)

FIG. 4

FIG. 5

CSI-Resource Config ID=0

NZP-CSI-RS-ResourceSet
for channel measurement

Resources:
{NZP CSI-RS ID #0 (32 ports),
NZP CSI-RS ID #1 (16 ports),
NZP CSI-RS ID #2 (16 ports),
NZP CSI-RS ID #3 (8 ports),
NZP CSI-RS ID #4 (8 ports),
NZP CSI-RS ID #5 (8 ports),
NZP CSI-RS ID #6 (8 ports),
}

CSI-
ReportConfig::=
{
resourcesForChannel
Measurement
CSI-
ResourceConfigId= 0
}

FIG. 6

FIG. 7

CSI-Resource Config ID=0

NZP-CSI-RS-ResourceSet
for channel measurement

Resources:
{NZP CSI-RS ID #0 (32 ports),
NZP CSI-RS ID #1 (16 ports),
NZP CSI-RS ID #2 (16 ports),
NZP CSI-RS ID #3 (8 ports),
NZP CSI-RS ID #4 (8 ports),
NZP CSI-RS ID #5 (8 ports),
NZP CSI-RS ID #6 (8 ports),
}

CSI-
ReportConfig::=
{
resourcesForChannel
Measurement
CSI-
ResourceConfigId= 0
}

FIG. 8

FIG. 9

| 0 | 1 | 2 | 3 | 4 | 5 | 6 | 7 | 8 | 9 | 10 | 11 | 12 |
|---|---|---|---|---|---|---|---|---|---|----|----|----|

32 ports

8-port CSI report

16-port CSI report

32-port CSI report

PUCCH

PUCCH

PUCCH

32 ports

8-port CSI report

16-port CSI report

32-port CSI report

PUCCH

PUCCH

PUCCH

FIG. 10

| 0 | 1 | 2 | 3 | 4 | 5 | 6 | 7 | 8 | 9 | 10 | 11 |
|---|---|---|---|---|---|---|---|---|---|----|----|

32 ports

32-port CSI report, 16-port CSI report, and 8-port CSI report

Trigger

PUCCH

32 ports

32-port CSI report, 16-port CSI report, and 8-port CSI report

Trigger

PUCCH

Quantity of occupied CPUs

0          3          0          3          0

FIG. 11

| 0 | 1 | 2 | 3 | 4 | 5 | 6 | 7 | 8 | 9 | 10 | 11 | 12 |

32 ports

32 ports

32 ports

16-port CSI report

PUCCH

8-port CSI report

PUCCH

Quantity of occupied CPUs

FIG. 12

| 0 | 1 | 2 | 3 | 4 | 5 | 6 | 7 | 8 | 9 | 10 | 11 | 12 |

Trigger

Trigger

Set 1 (16 ports)

Set 1 (8 ports)

Set 1 (32 ports)

16-port CSI report

PUCCH

8-port CSI report

PUCCH

Quantity of occupied CPUs

FIG. 13

CPU occupancy
determining apparatus — 50

Determining module — 51

FIG. 14

CPU occupancy
determining apparatus — 50

Determining module — 51

Receiving module — 52

FIG. 15

— 60

Communication device

61 — Processor ⟷ Memory — 62

FIG. 16

FIG. 17

## INTERNATIONAL SEARCH REPORT

| International application No. |
| --- |
| **PCT/CN2024/087807** |

| A. | CLASSIFICATION OF SUBJECT MATTER |
| --- | --- |

H04W24/10(2009.01)i

According to International Patent Classification (IPC) or to both national classification and IPC

| B. | FIELDS SEARCHED |
| --- | --- |

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNTXT: CNKI; ENTXTC; DWPI; 3GPP: 终端, 信道状态报告, 子报告, 处理单元, 占用, 时间段, 时段, 数量, 配置, 空域调整图样, terminal, UE, channel state report, CSI, sub-report, sub configuration, processing unit, CPU, occupancy, occupation, time period, period, number, configuration, space adjustment pattern

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | APPLE. "Discussion on Spatial and Power Domain Enhancements to Support Network Energy Saving" *3GPP TSG RAN WG1 #112bis-E, R1-2303496*, 07 April 2023 (2023-04-07), section 3 | 1-23 |
| A | VIVO. "Discussions on Techniques in Spatial and Power Domains" *3GPP TSG RAN WG1 #112bis-E, R1-2302498*, 07 April 2023 (2023-04-07), entire document | 1-23 |
| A | CN 110971382 A (VIVO MOBILE COMMUNICATION CO., LTD.) 07 April 2020 (2020-04-07) entire document | 1-23 |
| A | US 2022278802 A1 (SAMSUNG ELECTRONICS CO., LTD.) 01 September 2022 (2022-09-01) entire document | 1-23 |
| A | WO 2022214016 A1 (QUALCOMM INC. et al.) 13 October 2022 (2022-10-13) entire document | 1-23 |

| ☐ Further documents are listed in the continuation of Box C. | ☑ See patent family annex. |
| --- | --- |

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **12 June 2024** | **21 June 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/087807**

| Patent document cited in search report | | | Publication date (day/month/year) | Patent family member(s) | | | Publication date (day/month/year) |
|---|---|---|---|---|---|---|---|
| CN | 110971382 | A | 07 April 2020 | EP | 3860019 | A1 | 04 August 2021 |
| | | | | JP | 2022501967 | A | 06 January 2022 |
| | | | | US | 2021218453 | A1 | 15 July 2021 |
| | | | | SG | 11202103262 | PA | 29 April 2021 |
| | | | | KR | 20210065181 | A | 03 June 2021 |
| | | | | AU | 2019351179 | A1 | 27 May 2021 |
| | | | | CA | 3114818 | A1 | 02 April 2020 |
| | | | | WO | 2020063211 | A1 | 02 April 2020 |
| | | | | KR | 20210065181 | A | 03 June 2021 |
| | | | | IN | 202127019633 | A | 08 October 2021 |
| US | 2022278802 | A1 | 01 September 2022 | KR | 20210007706 | A | 20 January 2021 |
| | | | | WO | 2021010657 | A1 | 21 January 2021 |
| WO | 2022214016 | A1 | 13 October 2022 | EP | 4320912 | A1 | 14 February 2024 |
| | | | | WO | 2022213296 | A1 | 13 October 2022 |
| | | | | US | 2024154674 | A1 | 09 May 2024 |
| | | | | CN | 117136580 | A | 28 November 2023 |

Form PCT/ISA/210 (patent family annex) (July 2022)

**EP 4 701 261 A1**

**REFERENCES CITED IN THE DESCRIPTION**

**Patent documents cited in the description**

- CN 202310408570